(19) 

**Europäisches Patentamt**
**European Patent Office**
**Office européen des brevets**

(11) **EP 4 401 445 A1**

(12) **EUROPEAN PATENT APPLICATION**
published in accordance with Art. 153(4) EPC

(43) Date of publication:
**17.07.2024 Bulletin 2024/29**

(21) Application number: **22885823.9**

(22) Date of filing: **21.10.2022**

(51) International Patent Classification (IPC):
**H04W 16/02** (2009.01)

(52) Cooperative Patent Classification (CPC):
**H04L 65/60; H04L 65/80; H04W 16/02;**
**H04W 28/10**

(86) International application number:
**PCT/CN2022/126769**

(87) International publication number:
**WO 2023/071946 (04.05.2023 Gazette 2023/18)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.10.2021 CN 202111265533**

(71) Applicant: **Huawei Technologies Co., Ltd.**
**Shenzhen, Guangdong 518129 (CN)**

(72) Inventors:
• **HUANG, Zhenglei**
**Shenzhen, Guangdong 518129 (CN)**
• **PAN, Qi**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND APPARATUS**

(57) This application discloses a communication method and apparatus. In the method, an access network element obtains reference time, where the reference time indicates start time at which a terminal device processes first data; and the access network element processes the first data based on the reference time. According to the method disclosed in this application, the access network element can obtain the start time at which the terminal device processes the first data, and process the first data based on the start time at which the terminal device processes the first data, so that the first data can arrive at the terminal device in time, for example, arrive at the terminal device before the reference time. This improves user service experience.

FIG. 4

| Data packet arrival | Data packet 1_1 | Data packet 1_2 | Data packet 2_1 | Data packet 3_1 | Data packet 1_3 | Data packet 2_2 |

# Description

## CROSS-REFERENCE TO RELATED APPLICATIONS

This application claims priority to Chinese Patent Application No. 202111265533.9, filed with the China National Intellectual Property Administration on October 28, 2021 and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

As the new media industry rapidly develops, new requirements for communication technologies are raised. A surge of the amount of data in the new media industry poses a challenge to a network transmission capability, especially for highly interactive real-time extended reality (extended reality, XR) services. The XR services include a virtual reality (virtual reality, VR) service, an augmented reality (augmented reality, AR) service, a mixed reality (mixed reality, MR) service, a cloud extended reality (cloud XR) service, and the like.

An application server corresponding to the XR service sequentially sends data of the XR service to a terminal device through a user plane function (user plane function, UPF) network element and an access network element. In an ideal case, the terminal device sequentially receives the data of the XR service, and sequentially displays the data, to meet a high real-time requirement of the XR service. However, in an actual case, inherent uncertainty (such as network congestion and burst traffic) of network transmission cannot ensure time at which a data packet arrives at the terminal device. Consequently, data packets sent in order arrive at the terminal device out of order. As a result, problems such as frame freezing and skipping occur, and user service experience is affected.

## SUMMARY

Embodiments of this application provide a communication method and apparatus, to enable data to arrive at a terminal device in time. This improves user service experience.

According to a first aspect, this application provides a communication method. The method may be performed by an access network element, or may be performed by a component of an access network element. In the method, the access network element obtains reference time, where the reference time indicates start time at which a terminal device processes first data; and the access network element processes the first data based on the reference time.

Processing the first data may be understood as receiving the first data, decoding the first data, displaying the first data, or the like. This is not limited in this embodiment of this application.

In the foregoing embodiment, the access network element may obtain the start time at which the terminal device processes the first data, and process the first data based on the start time at which the terminal device processes the first data, so that the first data can arrive at the terminal device in time. For example, the first data arrives at the terminal device before the reference time. This reduces problems such as frame freezing and skipping, and improves user service experience.

In a possible design, that the access network element obtains the reference time may be that:

the access network element receives the reference time from the terminal device or an access and mobility management function network element; or the access network element obtains processing time of second data and a processing periodicity, and determines the reference time based on the processing time of the second data and the processing periodicity, where the first data and the second data are data of a periodic service, the processing periodicity indicates a periodicity for processing the periodic service, and the processing time of the second data indicates start time at which the terminal device processes the second data.

According to the foregoing design, the access network element may obtain the reference time in a plurality of manners, and flexibility is high. For example, the access network element may receive the reference time from the terminal device or the access and mobility management function network element. This implementation is simple. For another example, when the first data is the data of the periodic service, the access network element may obtain the reference time based on start time at which the terminal device processes other data and a processing periodicity. In this way, the access network element does not need to receive start time at which the terminal device processes each piece of data of the periodic service. This can reduce signaling interaction.

In a possible design, that the access network element obtains the processing time of the second data and the processing periodicity may be that:

the access network element receives the processing time of the second data and the processing periodicity from the terminal device; the access network element determines the processing time of the second data and the processing periodicity; or the access network element receives the processing time of the second data from the terminal device, and determines the processing periodicity.

According to the foregoing design, the access network element may obtain the processing time of the second data and the processing periodicity in a plurality of manners, and flexibility is high.

In a possible design, that the access network element processes the first data based on the reference time may be that:

the access network element sends the first data before the reference time; or
the access network element deletes the first data based on the reference time.

According to the foregoing design, the access network element may send the first data before the reference time. For example, the access network element completes sending of the first data before the reference time, so that the terminal device can receive the first data before the start time for processing the first data. Alternatively, the access network element may delete the first data based on the reference time. For example, the access network element cannot complete sending of the first data before the reference time, and there is subsequent data to be sent. In this case, even if the access network element sends the first data to the terminal device, the terminal device deletes the first data after receiving the first data. Therefore, the access network element may delete the first data, so that resources for transmitting the first data can be saved, and resource utilization can be improved.

In a possible design, that the access network element deletes the first data based on the reference time may be that:
when sending of the first data is not completed before the reference time, the access network element deletes the first data based on the reference time.

In a possible design, the first data is a media frame.

In a possible design, the method may further include: The access network element receives third data and fourth data before the reference time, where sending time of the fourth data is later than sending time of the third data; and the access network element deletes the third data based on the reference time.

That sending time of the fourth data is later than sending time of the third data means that start time at which the terminal device processes the fourth data is later than start time at which the terminal device processes the third data. In this case, in a process of processing the first data, when receiving the third data and the fourth data, the terminal device preferentially processes the fourth data and deletes the third data. In the foregoing design, in a process of processing the first data, when receiving the third data and the fourth data, the access network element may delete the third data based on the reference time, so that resources for transmitting the third data can be saved, and resource utilization can be improved.

In a possible design, that sending time of the fourth data is later than sending time of the third data includes:
a frame number of the fourth data is greater than a frame number of the third data. The frame number of the third data and the frame number of the fourth data indicate a sending sequence of the third data and the fourth data on an application server side.

According to the foregoing design, the access network element may determine, based on the frame number of the fourth data and the frame number of the third data, that the sending time of the fourth data on the application server side is later than the sending time of the third data on the application server side.

In a possible design, the method may further include: The access network element receives a plurality of data packets from a user plane function network element, where the plurality of data packets include a data packet of the first data, a header of each data packet of the plurality of data packets includes characteristic information, and the characteristic information includes at least one of a data identifier or a quantity of data packets; and the access network element determines the first data from the plurality of data packets based on the characteristic information in the header of each data packet.

According to the foregoing design, the access network element may determine all data packets of the first data from the plurality of received data packets.

According to a second aspect, this application provides a communication method. The method may be performed by a terminal device, or may be performed by a component of a terminal device. In the method, the terminal device sends processing time of second data to an access network element, where the processing time of the second data indicates start time at which the terminal device processes the second data; and the terminal device receives first data before reference time, where the reference time indicates start time at which the terminal device processes the first data.

Processing the first data may be understood as receiving the first data, decoding the first data, displaying the first data, or the like. This is not limited in this embodiment of this application.

In the foregoing embodiment, the terminal device reports the processing time of the second data to the access network element. In this way, the access network element may determine, based on the processing time of the second data, the start time at which the terminal device processes the first data, and process the first data based on the start time at which the terminal device processes the first data. For example, sending of the first data is completed before the start time at which the terminal device processes the first data, so that the terminal device can receive the first data before the start time at which the terminal device processes the first data.

In a possible design, the first data is the second data.

According to the foregoing design, the terminal device may directly report, to the access network element, the start time for processing the first data.

In a possible design, the method may further include: The terminal device sends a processing periodicity to the access network element, where the first data and the second data are data of a periodic service, and the processing periodicity indicates a periodicity for processing the periodic service.

According to the foregoing design, when the first data is the data of the periodic service, the terminal device may further report the periodicity of the periodic service to the access network element, so that the access network element may determine, based on the periodicity of the periodic service and the processing time of the second data, the start time at which the terminal device processes the first data.

In a possible design, the first data is a media frame.

According to a third aspect, this application provides a communication method. The method may be performed by a user plane function network element, or may be performed by a component of a user plane function network element. In the method, the user plane function network element obtains reference time, where the reference time indicates start time at which a terminal device processes first data; and the user plane function network element sends the first data to an access network element based on the reference time.

Processing the first data may be understood as receiving the first data, decoding the first data, displaying the first data, or the like. This is not limited in this embodiment of this application.

In the foregoing embodiment, the user plane function network element may obtain the start time at which the terminal device processes the first data, and send the first data to the access network element based on the start time at which the terminal device processes the first data. For example, sending of the first data is completed before the start time at which the terminal device processes the first data, so that the first data arrives at the access network element in time, and the first data can arrive at the access network element before the reference time.

In a possible design, that the user plane function network element obtains the reference time may be that:

the user plane function network element receives the reference time from a session management function network element; or
the user plane function network element obtains processing time of second data and a processing periodicity, and determines the reference time based on the processing time of the second data and the processing periodicity, where the first data and the second data are data of a periodic service, the processing periodicity indicates a periodicity for processing the periodic service, and the processing time of the second data indicates start time at which the terminal device processes the second data.

According to the foregoing design, the user plane function network element may obtain the reference time in a plurality of manners, and flexibility is high. For example, the user plane function network element may receive the reference time from the session management function network element. This implementation is simple. For another example, when the first data is the data of the periodic service, the user plane function network element may obtain the reference time based on start time at which the terminal device processes other data and a processing periodicity for processing other data by the terminal device. In this way, the user plane function network element does not need to receive start time at which the terminal device processes each piece of data of the periodic service. This can reduce signaling interaction.

In a possible design, that the user plane function network element obtains the processing time of the second data and the processing periodicity may be that:

the user plane function network element receives the processing time of the second data and the processing periodicity from the session management function network element;
the user plane function network element receives the processing time of the second data from the session management function network element, and determined the processing periodicity;
the user plane function network element determines the processing time of the second data, and receives the processing periodicity from the session management function network element; or
the user plane function network element determines the processing time of the second data, and determines the processing periodicity.

In a possible design, the first data is a media frame.

According to a fourth aspect, this application provides a communication apparatus. The communication apparatus may be an access network element, a terminal device, or a user plane function network element. When the communication apparatus is the access network element, the communication apparatus has a function of implementing the access network element in the first aspect or any possible design example of the first aspect. When the communication apparatus is the terminal device, the communication apparatus has a function of implementing the terminal device in the second aspect or any possible design example of the second aspect. When the communication apparatus is the user plane function network element, the communication apparatus has a function of implementing the user plane function network element in the third aspect or any possible design example of the third aspect. The function may be implemented by hardware, or may be implemented by executing corresponding software by hardware. The hardware or software includes one or more modules corresponding to the foregoing functions.

In a possible design, a structure of the communication apparatus may include a transceiver module and a processing module. The processing module is configured to support the communication apparatus in performing a corresponding function of the access network element in the first aspect or any possible design example of the first aspect, or performing a corresponding function of the terminal device in the second aspect or any possible design example of the second aspect, or performing a corresponding function of the user plane function network element in the third aspect or any possible design example of the third aspect. The transceiver module is configured to support communication between the communication apparatus and another device. For example, the transceiver module is configured to receive and send data under control of the processing module. Optionally, the communication apparatus may further include a storage module. The storage module may be coupled to the processing module, and store program instructions and data that are necessary for the communication apparatus.

In an example, the processing module may be a processor, the transceiver module may be an interface circuit, and the storage module may be a memory.

In a possible design, a structure of the communication apparatus includes an interface circuit and one or more processors. Optionally, the communication apparatus further includes a memory. The interface circuit is configured to receive and send data, and is configured to communicate and interact with another device in a communication system. The one or more processors are configured to support the communication apparatus in performing a corresponding function of the access network element in the first aspect or any possible design example of the first aspect, or performing a corresponding function of the terminal device in the second aspect or any possible design example of the second aspect, or performing a corresponding function of the user plane function network element in the third aspect or any possible design example of the third aspect. The memory is coupled to the one or more processors, and stores program instructions and data that are necessary for the communication apparatus.

In a possible design, a structure of the communication apparatus includes a memory and one or more processors. The memory stores program instructions. The one or more processors run the program instructions stored in the memory, to perform the method according to the first aspect or any possible design example of the first aspect, or perform the method according to the second aspect or any possible design example of the second aspect, or perform the method according to the third aspect or any possible design example of the third aspect.

According to a fifth aspect, this application provides a communication system. The communication system includes an access network element and a user plane function network element; or includes an access network element and a terminal device; or includes an access network element, a terminal device, and a user plane function network element. An access gateway node is configured to perform the method according to the first aspect and the possible design examples of the first aspect. The terminal device is configured to perform the method according to the second aspect and the possible design examples of the second aspect. The user plane function network element is configured to perform the method according to the third aspect and the possible design examples of the third aspect.

According to a sixth aspect, this application provides a computer-readable storage medium. The storage medium stores a computer program or instructions. When the computer program or the instructions are executed, the method according to the first aspect or any design of the first aspect may be implemented, or the method according to the second aspect or any design of the second aspect may be implemented, or the method according to the third aspect or any design of the third aspect may be implemented.

According to a seventh aspect, this application provides a computer program product. The computer program product includes a computer program (which may also be referred to as code or instructions). When the computer program is run, a computer is enabled to perform the method according to the first aspect or any design of the first aspect, or perform the method according to the second aspect or any design of the second aspect, or perform the method according to the third aspect or any design of the third aspect.

According to an eighth aspect, this application provides a chip system. The chip system includes a processor and an interface, and is configured to support a communication apparatus in implementing the method according to the first aspect or any design of the first aspect, or implementing the method according to the second aspect or any design of the second aspect, or implementing the method according to the third aspect or any design of the third aspect.

In a possible design, the chip system further includes a memory. The memory is configured to store necessary information and data of the foregoing communication apparatus. The chip system may include a chip, or may include a chip and another discrete device.

**BRIEF DESCRIPTION OF DRAWINGS**

FIG. 1 is a schematic diagram of a 5G architecture according to an embodiment of this application;
FIG. 2 is a schematic diagram of media frame transmission according to an embodiment of this application;

FIG. 3 is another schematic diagram of media frame transmission according to an embodiment of this application;

FIG. 4 is a schematic flowchart of a communication method according to an embodiment of this application;

FIG. 5a is a schematic diagram of data packet arrival according to an embodiment of this application;

FIG. 5b is a schematic diagram of data packet sending according to an embodiment of this application;

FIG. 5c is another schematic diagram of data packet sending according to an embodiment of this application;

FIG. 6 is still another schematic diagram of data packet sending according to an embodiment of this application;

FIG. 7 is a schematic flowchart of obtaining reference time according to an embodiment of this application;

FIG. 8 is another schematic flowchart of a communication method according to an embodiment of this application;

FIG. 9 is still another schematic flowchart of a communication method according to an embodiment of this application;

FIG. 10 is a schematic diagram of a structure of a communication apparatus according to an embodiment of this application; and

FIG. 11 is a schematic diagram of another structure of a communication apparatus according to an embodiment of this application.

## DESCRIPTION OF EMBODIMENTS

To make objectives, technical solutions, and advantages of this application clearer, the following further describes this application in detail with reference to the accompanying drawings. A specific operation method in method embodiments may also be applied to apparatus embodiments or system embodiments.

Terms "system" and "network" in embodiments of this application may be used interchangeably. "A plurality of means two or more. In view of this, "a plurality of" may also be understood as "at least two" in embodiments of this application. "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". Similarly, understandings of descriptions such as "at least one" are also similar. "At least one of the following items (pieces)" or a similar expression thereof refers to any combination of these items, including any combination of singular items (pieces) or plural items (pieces). For example, "at least one of A, B, and C" includes A, B, or C, includes A and B, A and C, or B and C, or includes A, B, and C. The term "and/or" describes an association relationship for describing associated objects and indicates that three relationships may exist. For example, A and/or B may indicate the following three cases: Only A exists, both A and B exist, and only B exists. In addition, the character "/" generally indicates an "or" relationship between the associated objects.

Unless otherwise specified, ordinal numbers such as "first" and "second" in embodiments of this application are used to distinguish between a plurality of objects, but are not intended to limit a sequence, a time sequence, priorities, or importance of the plurality of objects. In addition, descriptions of "first" and "second" do not necessarily indicate that objects are different.

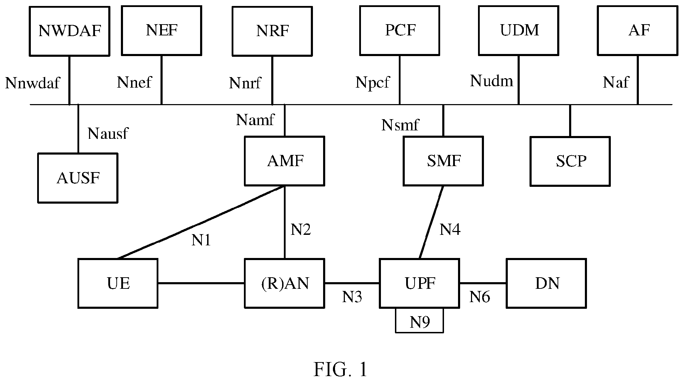

FIG. 1 is a schematic diagram of a 5th generation (5th generation, 5G) network architecture based on a service-oriented architecture. The 5G network architecture shown in FIG. 1 may include three parts: a terminal part, a data network (data network, DN) part, and an operator network part. The following briefly describes functions of some network elements.

An operator network may include but is not limited to one or more of the following network elements: a network data analytics function (network data analytics function, NWDAF) network element, an authentication server function (authentication server function, AUSF) network element, a network exposure function (network exposure function, NEF) network element, a network repository function (network repository function, NRF) network element, an access and mobility management function (access and mobility management function, AMF) network element, a policy control function (policy control function, PCF) network element, a unified data management (unified data management, UDM) network element, a session management function (session management function, SMF) network element, an access network (access network, AN) or a radio access network (radio access network, RAN) element, a service control point (service control point, SCP) and a user plane function (user plane function, UPF) network element, and the like. In the foregoing operator network, a part other than a radio access network part may be referred to as a core network part. In a possible implementation, the operator network further includes an application function (application function, AF) network element.

A terminal device (terminal device), a terminal for short, is a device having a wireless transceiver function, may be deployed on land, including indoor or outdoor, and may be handheld or vehicle-mounted. The device may be deployed on water (for example, on a ship); or may be deployed in the air (for example, in an airplane, a balloon, or a satellite). The terminal device may be a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), user equipment (user equipment, UE), and a terminal device applicable to the Internet of Things (Internet of Things, IoT) (like a terminal device in smart factory or a terminal device in smart manufacturing).

The foregoing terminals may establish a connection to the operator network through an interface (for example, N1) provided by the operator network, and use services such as a data service and/or a voice service provided by the operator network. The terminals may further access a DN through the operator network, and use an operator service deployed on the DN and/or a service provided by a third party. The third party may be a service party other than the operator network and the terminal device, and may provide other services such as a data service and/or a voice service for the terminal device. A specific representation form of the third party may be determined according to an actual application scenario, and is not limited herein.

ARAN is a subnet of the operator network, and is an implementation system between a service node in the operator network and the terminal device. To access the operator network, the terminal device first accesses the RAN, and then may be connected to the service node in the operator network via the RAN. ARAN device is a device that provides a wireless communication function for the terminal device, and the RAN device is also referred to as an access network device. The RAN device includes but is not limited to a next generation base station (g NodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseBand unit, BBU), a transmitting and receiving point (transmitting and receiving point, TRP), a transmitting point (transmitting point, TP), a mobile switching center, and the like.

The AMF network element mainly performs functions such as mobility management and access authentication/authorization. In addition, the AMF network element is responsible for transferring a user policy between the UE and the PCF.

The SMF network element mainly performs functions such as session management, execution of a PCF-delivered control policy, UPF selection, and UE Internet Protocol (Internet Protocol, IP) address allocation.

The UPF network element, serving as an interface to the data network, completes functions such as user plane data forwarding, session/flow-level charging statistics, and bandwidth restriction.

The UDM network element is mainly responsible for functions such as subscription data management and user access authorization.

The NWADF is configured to collect and analyze network data of technologies such as big data and artificial intelligence.

The SCP is configured to undertake control functions of all services provided by an intelligent network, for example, control a service switch point (service switch point, SSP) to complete a connection function.

The NEF network element is mainly configured to support exposure of capabilities and events.

The AF network element mainly transfers a requirement of an application side for a network side, for example, a quality of service (quality of service, QoS) requirement or user status event subscription. The AF may be a third-party functional entity, or may be an application service deployed by an operator, for example, an IP multimedia subsystem (IP Multimedia Subsystem, IMS) voice call service.

The PCF network element is mainly responsible for policy control functions such as charging for a session level or a service data flow level, QoS bandwidth guarantee, mobility management, and UE policy decision. In this architecture, PCFs connected to the AMF and the SMF respectively correspond to an AM PCF (PCF for Access and Mobility Control) and an SM PCF (PCF for Session Management). In an actual deployment scenario, the AM PCF and the SM PCF may not be a same PCF entity.

The NRF may be configured to provide a network element discovery function and provide, based on a request from another network element, network element information corresponding to a network element type. The NRF further provides network element management services such as registration, update, and deregistration of a network element, and subscription and push of a network element status.

The AUSF network element is mainly responsible for authenticating a user, to determine whether to allow the user or a device to access a network.

The DN is a network located outside the operator network. The operator network may access a plurality of DNs, and a plurality of services may be deployed on the DN, to provide services such as a data service and/or a voice service for the terminal device. For example, the DN is a private network of a smart factory, a sensor installed in a workshop in the smart factory may be a terminal device, a control server of the sensor is deployed in the DN, and the control server may provide a service for the sensor. The sensor may communicate with the control server, obtain instructions of the control server, and transmit collected sensor data to the control server based on the instructions, and the like. For another example, the DN is an internal office network of a company, a mobile phone or a computer of an employee of the company may be a terminal device, and the mobile phone or the computer of the employee may access information, a data resource, and the like on the internal office network of the company.

In FIG. 1, Nnwdaf, Nausf, Nnef, Nnrf, Namf, Npcf, Nsmf, Nudm, Naf, N1, N2, N3, N4, N6, and N9 are interface sequence numbers. For meanings of these interface serial numbers, refer to meanings defined in the 3rd generation partnership project (3rd generation partnership project, 3GPP) standard protocol. This is not limited herein.

It may be understood that the network elements or the functions may be network elements in a hardware device, or may be software functions running on dedicated hardware, or may be virtualized functions instantiated on a platform (for example, a cloud platform). Optionally, the network elements or the functions may be implemented by one device, or may be jointly implemented by a plurality of devices, or may be function modules in one device. This is not specifically limited in embodiments of this application.

The foregoing describes the application scenario to which embodiments of this application are applicable, and the following describes technical features related to embodiments of this application.

As new media industry rapidly develops, new requirements for communication technologies are raised. A surge of data volume in the new media industry poses a challenge to a network transmission capability, especially for highly interactive real-time extended reality (extended reality, XR) services. The XR service includes a virtual reality (virtual reality, VR) service, an augmented reality (augmented reality, AR) service, a mixed reality (mixed reality, MR) service, a cloud extended reality (Cloud XR) service, and the like.

An existing media service usually uses a real-time transport protocol (real-time transport protocol, RTP) based on a user datagram protocol (user datagram protocol, UDP) and a derivative protocol thereof, like a real-time transport control protocol (real-time transport control protocol, RTCP), or web real-time communication (web real-time communication, WebRTC), to transmit data of the XR service, to ensure an end-to-end low interaction delay and try to meet a high real-time requirement of the XR service. However, this best-effort transmission manner causes out-of-order transmission of data packets, packet loss, and the like, and affects user service experience of a high real-time XR service. Inherent uncertainty of network transmission further increases uncertainty of data packet transmission. As a result, it is difficult to ensure time for a data packet to arrive at a user side. This does not meet a real-time requirement of the XR service, and affects user service experience.

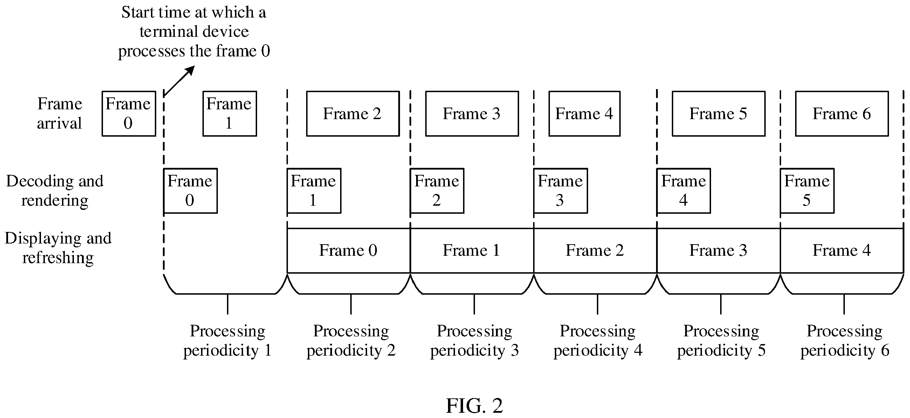

FIG. 2 is a schematic diagram in which a media frame arrives at a terminal device by using a media frame as an example. The terminal device receives a media frame in an $N^{th}$ (N is a positive integer) processing periodicity, performs decoding and rendering on the media frame in an $(N+1)^{th}$ periodicity, and performs displaying and refreshing on the media frame in an $(N+2)^{th}$ periodicity. As shown in FIG. 2, a media frame 0 (a frame 0 is used as an example in FIG. 2), a media frame 1, a media frame 2, a media frame 3, a media frame 4, a media frame 5, and a media frame 6 arrive at the terminal device in sequence. Then, the terminal device starts to perform, at start time at which the terminal device processes the media frame 0, decoding and rendering, and displaying and refreshing on the plurality of arrived media frames. Media frames sent by an application server in sequence arrive at the terminal device in sequence, so that the terminal device can display the media frames in sequence. A delay from sending the media frames to displaying the media frames is only a transmission delay and a processing (such as decoding and rendering, and displaying and refreshing) delay on a terminal device side. This can ensure real-time performance of a service.

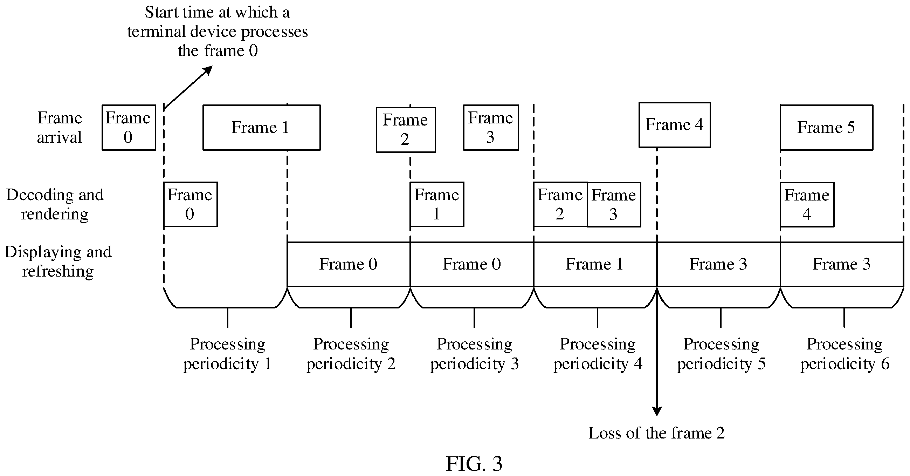

FIG. 3 is another schematic diagram in which a media frame arrives at a terminal device by using a media frame as an example. Because there is uncertainty in network transmission between a server and the terminal device, for example, congestion and burst traffic, there is also uncertainty in time at which media frames sent in sequence arrive at the terminal device. As shown in FIG. 3, a media frame 1 does not arrive at the terminal device in a processing periodicity 1, and the terminal device cannot perform decoding and rendering on the media frame 1 in a processing periodicity 2, and cannot perform displaying and refreshing on the media frame 1 in a processing periodicity 3. In this way, no new media frame is displayed in the processing periodicity 3. As a result, the terminal device that is supposed to display the media frame 1 in the processing periodicity 3 continues to display a media frame 0, and frame freezing occurs. In addition, when a plurality of media frames arrive at the terminal device in one processing periodicity, the terminal device preferentially processes a latest arrived media frame. As shown in FIG. 3, a media frame 2 and a media frame 3 arrive at the terminal device in the processing periodicity 3, and the terminal device displays the media frame 3, that is, displays the media frame 3 after displaying the media frame 1. As a result, the media frame 2 is lost and a display jump occurs.

An application server sends a plurality of media frames in sequence. However, due to uncertainty of network transmission, time at which the plurality of media frames sent in sequence arrive at the terminal device is also uncertain. For example, the plurality of media frames cannot arrive at the terminal device before start time at which the terminal device processes the media frames, so that the terminal device cannot start to process the media frames at the start time for processing the media frames. As a result, problems such as frame freezing and packet loss occur, user service experience is affected, and a real-time requirement is not met.

The foregoing describes the application scenario to which embodiments of this application are applicable and related technical features. The following describes a communication method provided in embodiments with reference to the accompanying drawings.

Embodiments of this application provide a communication method. The method may be applied to the communication system shown in FIG. 1. An access network element and a user plane function network element in embodiments of this application may be respectively the RAN and the UPF network element in FIG. 1, or may be network elements that have functions of the RAN and the UPF network element in a future communication network like a sixth generation (6th generation, 6G) network. This is not limited in embodiments of this application. For ease of description, in embodiments of this application, an example in which the access network element and the user plane function network element are respectively the RAN and the UPF network element is used for description.

In addition, it should be noted that a service in embodiments of this application may be an XR service (for example, a VR service, an AR service, an MR service, or a cloud XR service), a voice service, or the like. This is not limited in embodiments of this application. For ease of understanding of embodiments of this application, the following describes an example in which a service in embodiments of this application is an XR service. Correspondingly, data in embodiments of this application may be understood as a media frame, a video fragment, or the like.

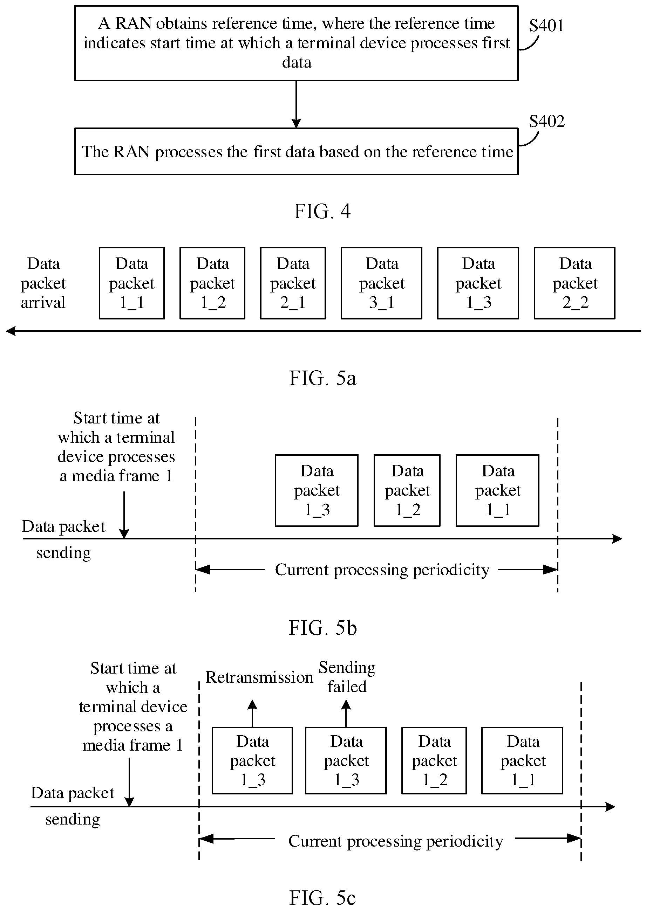

FIG. 4 is a schematic flowchart of a communication method according to an embodiment of this application. As shown in FIG. 4, the method may include the following content.

S401: A RAN obtains reference time.

The reference time indicates start time at which a terminal device processes first data. The reference time may be absolute time, or may be relative time on a terminal device side. This is not limited in this embodiment of this application. The first data may be a media frame, a video fragment, voice data, or the like. A specific form of the first data is not limited in this embodiment of this application. In addition, the first data includes one or more data packets. In this embodiment of this application, an example in which the first data includes a plurality of data packets is used for description. The start time at which the terminal device processes the first data may be understood as a moment at which the terminal device starts to receive the first data, may be understood as a moment at which the terminal device completes receiving of the first data, may be understood as a moment at which the terminal device starts to decode the first data, may be understood as a moment at which the terminal device starts to display or play the first data, or the like. This is not limited in this embodiment of this application.

The RAN obtains the reference time, to subsequently process the first data based on the reference time. Specifically, the RAN may obtain the reference time in the following manners.

Manner 1: The RAN receives the reference time.

In an example, the RAN may receive the reference time from the terminal device. Specifically, the terminal device may report the reference time to the RAN. Correspondingly, the RAN receives the reference time.

For example, the terminal device may send the reference time to the RAN through a radio resource control (radio resource control, RRC) message. For example, after the terminal device establishes an RRC connection to the RAN, the terminal device may send the RRC message including the reference time to the RAN. Correspondingly, after receiving the RRC message, the RAN parses the RRC message to obtain the reference time. For another example, if the terminal device has a service requirement, the terminal device may send the RRC message including the reference time to the RAN. Correspondingly, after receiving the RRC message, the RAN parses the RRC message to obtain the reference time.

In another example, the RAN may receive the reference time from an AMF network element. Specifically, the terminal device may initiate a protocol data unit (protocol data unit, PDU) session modification procedure, and send the reference time to the RAN through the AMF network element. Correspondingly, the RAN receives the reference time. For example, the terminal device has a service requirement, initiates a PDU session modification procedure, and transparently transmits a non-access stratum (non-access stratum, NAS) message including the reference time to the AMF network element through the RAN. The AMF network element and an SMF network element forward the reference time to a UPF network element. After receiving the reference time, the UPF network element sends the reference time to the RAN through the SMF network element and the AMF network element. The RAN receives the reference time from the AMF network element.

In the foregoing manner 1, the RAN may obtain the reference time through a receiving operation. This implementation is simple. For example, the terminal device reports the reference time to the RAN, and the RAN receives the reference time from the terminal device. For another example, the terminal device sends the reference time to the RAN through a core network element, and the RAN receives the reference time from the core network element.

Manner 2: The RAN determines the reference time based on processing time of second data and a processing periodicity.

The first data and the second data are data of a same service, and the second data may be any piece of data in the service. For example, the second data may be a first piece of data in the service. The first data and the second data may be data of a periodic service, that is, a service to which the first data belongs is the periodic service. For example, the first data and the second data are media frames. The processing time of the second data indicates start time at which the terminal device processes the second data. The processing periodicity indicates a periodicity for processing the periodic service, that is, indicates a periodicity for processing the service to which the first data belongs. For example, when the first data and the second data are media frames, the processing periodicity may be understood as a periodicity for displaying a media frame by the terminal device, as shown in FIG. 2 and FIG. 3, may be understood as a periodicity for decoding and rendering a media frame by the terminal device, as shown in FIG. 2 and FIG. 3, may be understood as a periodicity for generating a media frame by an application server, may be understood as a periodicity for sending a media frame by an application server, or the like. For example, the application server generates a media frame based on a periodicity T, that is, generates one media frame in one periodicity T; and the application server may send a media frame based on the periodicity T, that is, send one media frame in one periodicity T. After receiving the media frame, the terminal device decodes and renders one media frame in one periodicity T, and displays one media frame in one periodicity T.

For example, the RAN may obtain the processing time of the second data and the processing periodicity, and store the processing time of the second data and the processing periodicity, to subsequently obtain the reference time based on the processing time of the second data and the processing periodicity. That is, the RAN may obtain processing time of any piece of data in the periodic service and a processing periodicity of the periodic service, and obtain processing time of another piece of data in the periodic service based on the processing time of any piece of data and the processing periodicity of the periodic service.

The RAN may obtain the processing time of the second data and the processing periodicity through a receiving operation. For example, the RAN may receive the processing time of the second data and the processing periodicity that are reported by the terminal device. Specifically, after the terminal device establishes an RRC connection to the RAN, or when the terminal device has a service requirement, the terminal device may send an RRC message including the processing time of the second data and the processing periodicity to the RAN. Correspondingly, the RAN receives the RRC message, and parses the RRC message to obtain the processing time of the second data and the processing periodicity. For another example, the RAN may receive the processing time of the second data and the processing periodicity from an AMF network element. Specifically, the terminal device has a service requirement, initiates a PDU session modification procedure, and transparently transmits a NAS message including the processing time of the second data and the processing periodicity to the AMF network element through the RAN. The AMF network element and an SMF network element send the processing time of the second data and the processing periodicity to a UPF network element. Correspondingly, the RAN receives the processing time of the second data and the processing periodicity from the AMF network element.

Alternatively, the RAN may determine the processing time of the second data and the processing periodicity. For example, the RAN may determine the processing time of the second data and the processing periodicity of the service based on a historical transmission status of a service to which the first data belongs. For example, the RAN may collect statistics on transmission duration of each piece of data in a historical transmission process of the service based on the historical transmission status of the service, and determine a processing periodicity of the service based on the transmission duration of each piece of data. For example, the RAN performs a statistical average operation. For example, the RAN may use transmission completion time of one piece of data (denoted as the second data) in the historical transmission process of the service as start time at which the terminal device processes the data, to obtain processing time of the second data. A media frame is used as an example. The RAN may use transmission completion time of a first media frame as start time at which the terminal device processes the first media frame.

Alternatively, the RAN may obtain the processing time of the second data and determine the processing periodicity through a receiving operation. For example, the RAN may receive the processing time of the second data from the terminal device or an AMF network element, and determine the processing periodicity based on a historical transmission status of the service to which the first data belongs. For a specific implementation process in which the RAN obtains the processing time of the second data through the receiving operation, refer to the foregoing related description. Details are not described herein again. In addition, for a specific implementation process in which the RAN determines the processing periodicity, refer to the foregoing related description. Details are not described herein again.

Alternatively, the RAN may obtain the processing periodicity and determine the processing time of the second data through a receiving operation. For example, the RAN may receive the processing periodicity from the terminal device or the AMF network element, and determine the processing time of the second data based on a historical transmission status of the service to which the first data belongs. For a specific implementation process in which the RAN obtains the processing periodicity through the receiving operation, refer to the foregoing related description. Details are not described herein again. In addition, for a specific implementation process in which the RAN determines the processing time of the second data, refer to the foregoing related description. Details are not described herein again.

The RAN may obtain the processing time of the second data and the processing periodicity in a plurality of manners. This implementation is flexible and has strong adaptability. Further, after obtaining the processing time of the second data and the processing periodicity, the RAN may determine the reference time based on the processing time of the second data and the processing periodicity.

For example, the RAN may determine the reference time based on a sending sequence of the second data on an application server, a sending sequence of the first data on the application server, and the processing time of the second data and the processing periodicity. For example, the RAN may determine the reference time according to the following formula (1):

$$t1 = t0 + (j - i) \times T \quad (1),$$

where
the first data is a $j^{th}$ piece of data sent by the application server, and the second data is an $i^{th}$ piece of data sent by the application server; j and i are both positive integers, and j may be greater than i, may be less than i, or may be equal to i; and t0 is the processing time of the second data, namely, start time at which the terminal device processes the $i^{th}$ piece of data, T is the processing periodicity, and t1 is the reference time, namely, start time at which the terminal device processes the first data. For example, the second data is a first piece of data sent by the application server, the first data is a third piece of data sent by the application server, t0 is 0 milliseconds (ms), and T is 16.67 ms. In this case, the RAN may obtain, through calculation according to the foregoing formula (1), that the reference time t1 is 33.34 ms, that is, the start time at which the terminal device processes the first data is 33.34 ms.

In the foregoing manner 2, the RAN may obtain the reference time based on the processing time of the second data and the processing periodicity. In other words, the RAN may obtain processing time of other data of a service based on start time at which the terminal device processes one piece of data of the service and a processing periodicity. In this way, the RAN does not need to receive processing time of each piece of data of the service. This reduces signaling interaction and improves resource utilization.

After obtaining the reference time, the RAN may store the reference time, so that the RAN subsequently processes the first data based on the reference time after receiving the first data, that is, performs content of step S402. Alternatively, after receiving the first data, the RAN obtains the reference time, and then processes the first data based on the reference time, that is, performs content of step S402. An execution sequence of obtaining the reference time is not limited in this embodiment of this application.

S402: The RAN processes the first data based on the reference time.

The first data may include one or more data packets. In this embodiment of this application, an example in which the first data includes a plurality of data packets is used for description. A header of each data packet of the first data includes characteristic information, and the characteristic information is used to identify data to which the data packet belongs. The characteristic information may include a data identifier, like a number, a sequence number, or a frame number of data. Further, the characteristic information may further include a quantity of data packets, namely, a quantity of data packets included in the data to which the data packet belongs. For example, the first data is a media frame, and the characteristic information includes a quantity of data packets in the media frame. The characteristic information is encapsulated in the header of the data packet, for example, encapsulated at an Internet Protocol (Internet Protocol, IP) layer, or encapsulated at an application layer, or encapsulated at a transport layer, or may be encapsulated at another layer. This is not limited in this embodiment of this application.

For example, before step S402, the RAN may receive the first data from a UPF network element. Specifically, the application server sends service data to the UPF network element, where the service data includes a plurality of data packets, and the plurality of data packets include a data packet of the first data. After receiving the service data, the UPF network element sends the service data to the RAN. Correspondingly, the RAN receives the service data. Further, the RAN may determine the first data from the plurality of data packets based on the characteristic information in the header of each data packet of the plurality of data packets.

The application server may actively send the service data to a terminal device. That is, the application server actively sends the service data to the UPF network element. After receiving the service data, the UPF network element forwards the service data to the RAN, so that the RAN sends the service data to the terminal device. Alternatively, the application server may send the service data to the terminal device in response to a service request of the terminal device. That is, if the terminal device has a service requirement, the terminal device may send a service request message to the UPF network element through the RAN. After receiving the service request message, the UPF network element forwards the service request message to an application server corresponding to a service. After receiving the service request message, the application server sends service data to the UPF network element. Further, after receiving the service data, the UPF network element forwards the service data to the RAN, so that the RAN sends the service data to the terminal device.

Optionally, if the service data is data of a periodic service, the application server may generate or obtain a plurality of pieces of data of the service data based on a processing periodicity, for example, obtain one piece of data in one processing periodicity; and the application server may send the plurality of pieces of data of the service data to the UPF network element one by one based on the processing periodicity, for example, send one piece of data in one processing periodicity.

It should be noted that the application server sends the plurality of pieces of data in sequence, but a sequence in which the RAN receives the plurality of pieces of data is also uncertain due to uncertainty of network transmission. For example, the service data is video data.

The service data includes a media frame 0, a media frame 1, a media frame 2, a media frame 3, and a media frame 4. The application server sends the service data in a sequence of the media frame 0, the media frame 1, the media frame 2, the media frame 3, and the media frame 4. Data transmission is performed at a granularity of a data packet. Due to uncertainty of a network environment between the application server and the UPF network element and a network environment between the UPF network element and the RAN, for example, burst traffic and network congestion, the plurality of media frames cannot arrive at the UPF network element and the RAN network element in sequence. For example, a data packet in the media frame 1 arrives at the UPF network element before a data packet in the media frame 0. For another example, the media frame 3 arrives at the RAN later than the media frame 4.

After receiving the first data, the RAN may process the first data based on the reference time. That the RAN processes the first data based on the reference time may be understood as that the RAN performs priority scheduling on a sending sequence of the first data based on the reference time. For example, the RAN sends the first data before the reference time, or the RAN deletes the first data based on the reference time. The following describes the two processing manners (1) and (2).

(1) The RAN sends the first data before the reference time. For example, the RAN sends the first data to the terminal device before the reference time.

For example, the RAN may determine that data that needs to be currently transmitted is the first data, and determine the first data from a plurality of data packets based on characteristic information in a header of each data packet in the plurality of received data packets. Further, if the RAN determines that sending or transmission of the first data can be completed before the reference time, the RAN sends the first data before the reference time; or if current time is earlier than the reference time, the RAN sends the first data before the reference time. For example, the RAN may determine, based on duration required for transmitting the first data and the reference time, whether sending or transmission of the first data can be completed before the reference time. For example, if a sum of the current time and the duration required for transmitting the first data is less than or equal to the reference time, the RAN may determine that sending or transmission of the first data can be completed before the reference time.

A first data packet in the first data is used as an example. The RAN may determine, based on characteristic information in a header of the first data packet, whether the first data packet belongs to the first data. If the first data packet belongs to the first data and sending or transmission of the first data can be completed before the reference time (or the current time is earlier than the reference time), the RAN sends the first data packet to the terminal device before the reference time. If the first data packet does not belong to the first data, after sending the first data, the RAN may perform priority scheduling again on a sending sequence of the first data packet based on the characteristic information in the header of the first data packet.

The RAN may determine, based on a historical transmission status of a service, that data that currently needs to be transmitted is the first data. For example, in an initial phase, the RAN has not transmitted data of the service, and the RAN may determine that the data that currently needs to be transmitted is a first piece of data in the service. For another example, after the initial phase, the RAN may determine that the data that currently needs to be transmitted is next piece of data of latest sent data. A media frame is used as an example. Latest data sent by the RAN is the media frame 2, and the RAN may determine that data that needs to be transmitted currently is the media frame 3. In addition, the RAN may determine, based on sending duration (or transmission duration) of historical data, duration required for transmitting the first data; determine, based on a current valid network transmission resource, duration required for transmitting the first data; determine, based on sending duration (or transmission duration) of historical data and a current valid network transmission resource, duration required for transmitting the first data, or the like. This is not limited in this embodiment of this application.

In a possible implementation, if the first data is data of a periodic service, the RAN may send the first data to the terminal device in a current processing periodicity and before the reference time. For example, the RAN may determine that data that needs to be transmitted in the current processing periodicity is the first data, and determine the first data from a plurality of data packets based on characteristic information in a header of each data packet of the plurality of received data packets. Further, if the RAN determines that sending or transmission of the first data can be completed in the current processing periodicity and before the reference time or the current time is earlier than the reference time, the RAN sends the first data to the terminal device in the current processing periodicity and before the reference time.

For example, the first data includes a first data packet, and the RAN may determine, based on characteristic information in a header of the first data packet, whether the first data packet belongs to the first data. If the first data packet belongs to the first data, and it is determined that sending or transmission of the first data can be completed in the current processing periodicity and before the reference time (or it is determined that the current time is earlier than the reference time), the RAN sends the first data packet to the terminal device in the current processing periodicity and before the reference time. If the first data packet does not belong to the first data, after sending the first data, the RAN may perform priority scheduling again on a sending sequence of the first data packet based on the characteristic information in the header of the first data packet.

In the foregoing implementation, the RAN can send a plurality of data packets of one piece of data to the terminal device in one processing periodicity, and send the plurality of data packets to the terminal device before start time at which the terminal device processes the data. This can avoid that the plurality of data packets of one piece of data arrive at a terminal device side across a plurality of processing periodicities, to reduce problems such as frame freezing, skipping, and packet loss caused when the terminal device receives a data packet of a same piece of data in the plurality of processing periodicities.

Optionally, if the first data packet does not belong to the first data, the RAN may determine not to send the first data packet to the terminal device in the current processing periodicity. In other words, the RAN sends only a plurality of data packets of one piece of data in one processing periodicity. This can avoid sending a plurality of pieces of data in one processing periodicity, to reduce problems such as packet loss and skipping caused when the terminal device processes only one piece of data in a plurality of pieces of data received in one processing periodicity, improve user service experience, and reduce air interface resource transmission pressure.

A video service is used as an example. As shown in FIG. 5a, a RAN receives a plurality of data packets, which are respectively denoted as a data packet 1_1, a data packet 1_2, a data packet 2_1, a data packet 3_1, a data packet 1_3, and a data packet 2_2. The RAN determines that a video frame that needs to be transmitted in a current processing periodicity is a media frame 1. The RAN determines, based on characteristic information in a header of each data packet, that the data packet 1_1, the data packet 1_2, and the data packet 1_3 belong to the media frame 1, and the media frame 1 includes three data packets, that is, the RAN receives all data packets in the media frame 1. The data packet 2_1 and the data packet 2_2 belong to a media frame 2 and do not belong to the media frame 1; and the data packet 3_1 belongs to a media frame 3 and does not belong to the media frame 1. Further, as shown in FIG. 5b, the RAN preferentially sends the three data packets of the media frame 1 based on start time at which the terminal device processes the media frame 1, that is, sends the data packet 1_1, the data packet 1_2, and the data packet 1_3 to the terminal device in one processing periodicity and before the start time at which the terminal device processes the media frame 1.

(2) The RAN deletes the first data based on the reference time. For example, after receiving the first data, the RAN determines that sending or transmission of the first data cannot be completed before the reference time, and the RAN may delete the first data based on the reference time.

For example, the RAN may determine that data that needs to be currently transmitted is the first data, and determine the first data from a plurality of data packets based on characteristic information in a header of each data packet in the plurality of received data packets. Further, if the RAN determines that sending or transmission of the first data cannot be completed before the reference time, the RAN may delete the first data; or if current time is later than the reference time, the RAN may delete the first data. For example, the RAN may determine, based on duration required for transmitting the first data and the reference time, whether sending or transmission of the first data can be completed before the reference time. For example, if a sum of the current time and the duration required for transmitting the first data is greater than the reference time, the RAN may determine that sending or transmission of the first data cannot be completed before the reference time. In this case, sending the first data by the RAN to the terminal device affects sending of other data that is of a service to which the first data belongs and that is currently received by the RAN (for example, data whose sending sequence on an application server side is later than a sending sequence of the first data on the application server side). For example, sending of the other data cannot be completed before start time at which the terminal device processes the other data. Further, even if the RAN sends the first data to the terminal device, the terminal device deletes the first data based on a real-time requirement. In this embodiment of this application, when determining that sending or transmission of the first data cannot be completed before the reference time, the RAN deletes the first data, so that resources for transmitting the first data can be saved, and transmission resource utilization can be improved. In addition, the RAN may use the saved resource to ensure subsequent data transmission, to ensure user service experience.

For a specific implementation in which the RAN determines that the data that needs to be currently transmitted is the first data, refer to related description in the foregoing processing manner (1). Details are not described herein again. For a specific implementation in which the RAN determines the duration required for transmitting the first data, refer to related description in the foregoing processing manner (1). Details are not described herein again.

In a possible implementation, the first data includes a second data packet, and the RAN fails to send the second data packet to the terminal device. The RAN may determine whether transmission or retransmission of the second data packet can be completed before the reference time. For example, the RAN may determine, based on at least one of sending duration of a historical data packet or a current valid network transmission resource, duration required for transmitting or retransmitting the second data packet; and determine, based on the duration required for transmitting or retransmitting the second data packet and the reference time, whether transmission or retransmission of the second data packet can be completed before the reference time. If the RAN determines that transmission or retransmission of the second data packet can be completed before the reference time, the RAN sends the second data packet to the terminal device before the reference time. If the RAN determines that retransmission of the second data packet cannot be completed before the reference time, the RAN deletes the first data.

Further, if the first data is data of a periodic service, the RAN may determine whether transmission or retransmission of the second data packet is completed in a current processing periodicity and before the reference time. For example, the RAN may determine, based on at least one of sending duration of a historical data packet or a current valid network transmission resource, duration required for transmitting or retransmitting the second data packet; and determine, based on the duration required for transmitting or retransmitting the second data packet, the reference time, and a processing periodicity, whether transmission or retransmission of the second data packet can be completed in the current processing periodicity and before the reference time. If the RAN determines that transmission or retransmission of the second data packet can be completed in the current processing periodicity and before the reference time, the RAN sends the second data packet to the terminal device in the current processing periodicity and before the reference time. If the RAN determines that transmission or retransmission of the second data packet cannot be completed in the current processing periodicity and before the reference time, the RAN may delete the first data.

FIG. 5a is used as an example. The RAN receives a plurality of data packets: a data packet 1_1, a data packet 1_2, a data packet 2_1, a data packet 3_1, a data packet 1_3, and a data packet 2_2. The RAN sends three data packets of a media frame 1 to the terminal device in a current processing periodicity and before processing time of the media frame 1. The RAN fails to send the data packet 1_3 to the terminal device, and a retransmission mechanism of the RAN is triggered. The RAN determines whether retransmission of the data packet 1_3 can be completed in the current processing periodicity and before the processing time of the media frame 1. As shown in FIG. 5c, if retransmission of the data packet 1_3 can be completed in the current processing periodicity and before the processing time of the media frame 1, the RAN sends the data packet 1_3 to the terminal. Otherwise, the RAN discards the media frame 1.

In a possible implementation, the RAN receives service data from a UPF network element, where the service data includes all data packets of the first data, some or all data packets of third data, and all data packets of fourth data. Sending time of the fourth data is later than sending time of the third data, that is, the sending time of the fourth data on an application server side is later than the sending time of the third data on the application server side. For example, a frame number (or a number, a sequence number, or the like) of the fourth data is greater than a frame number (or a number, a sequence number, or the like) of the third data. The RAN may send the first data before the reference time, and delete the third data based on the reference time.

For example, the RAN receives all data packets of the third data. The RAN receives the third data and the fourth data before the reference time. After sending the first data, the RAN successively sends the third data and the fourth data to the terminal device. In this case, the terminal device receives the third data and the fourth data before the reference time or in a process of processing the first data. To ensure real-time performance, after completing processing of the first data, the terminal device preferentially processes latest data sent by the application server side. For example, the terminal device preferentially processes data with a largest frame number in a plurality of pieces of received data, that is, the terminal device preferentially processes the fourth data and deletes the third data. Optionally, the third data may partially arrive at the terminal device. In this embodiment of this application, in a process of processing the first data, the RAN receives a plurality of pieces of data, and may retain, based on start time at which the terminal device processes the first data, data that is sent at latest time in the plurality of pieces of data, and delete remaining data. In this way, network transmission resources can be saved, resource utilization can be improved, an end-to-end delay on a user side can be reduced, real-time user service experience can be ensured, and storage resources of the terminal device can be saved.

Further, if the first data is data of a periodic service, the RAN receives all data packets of the first data, some or all data packets of the third data, and all data packets of the fourth data from a UPF network element. The RAN sends the first data in a current processing periodicity and before the reference time. Further, the RAN may determine to send the fourth data in a periodicity following the current processing periodicity and before start time at which the terminal device processes the fourth data, and delete the third data. Sending time of the fourth data on an application server side is later than sending time of the third data on the application server side. Optionally, there is an interval of one or more processing periodicities between the sending time of the fourth data on the application server side and the sending time of the third data on the application server side.

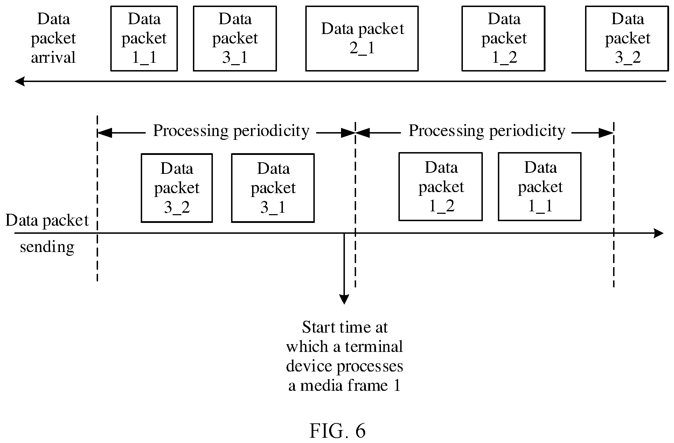

For example, the first data is a media frame 1. The RAN receives a plurality of data packets, which are respectively denoted as a data packet 1_1, a data packet 3_1, a data packet 2_1, a data packet 1_2, and a data packet 3_2. The RAN determines, based on the characteristic information in a header of each data packet, that the data packet 1_1 and the data packet 1_2 belong to the media frame 1, and the media frame 1 includes two data packets, that is, the RAN receives all data packets of the media frame 1. The data packet 2_1 belongs to a media frame 2 and does not belong to the media frame 1; and the data packet 3_1 and the data packet 3_2 belong to a media frame 3 and do not belong to the media frame 1. The media frame 3 includes two data packets, that is, the RAN receives all data packets of the media frame 3. The RAN determines that there is an interval of at least one processing periodicity between the media frame 1 and the media frame 3. Further, the RAN sends the media frame 1 to the terminal device in a current processing periodicity and before start time at which the terminal device processes the media frame 1, determines to discard the media frame 2, and sends the media frame 2 to the terminal device in a next processing periodicity of the current processing periodicity and before start time at which the terminal processes the media frame 2, that is, sends the data packet 2_1 and the data packet 2_2, as shown in FIG. 6.

In this case, the RAN completes processing of the first data based on the start time at which the terminal device processes the first data.

In the foregoing embodiment, the RAN processes the first data based on the start time at which the terminal device processes the first data, for example, performs priority scheduling on a sending sequence of the first data, so that the first data can arrive at the terminal device before the reference time. This reduces an out-of-order degree of arrival of a plurality of data packets at the terminal device, to reduce problems such as frame freezing and skipping, and improve user service experience.

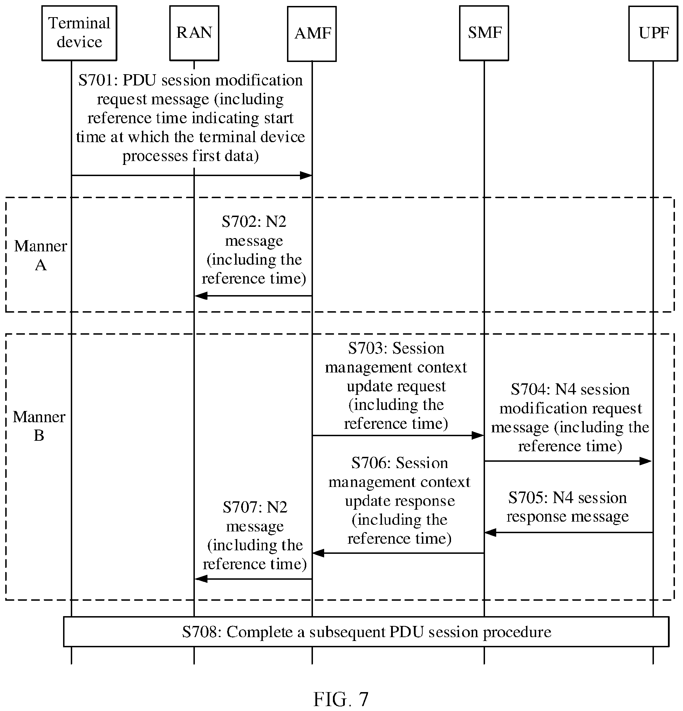

In step S401, the RAN receives the reference time from the AMF network element, or receives the processing time of the second data from the AMF network element, or receives the processing periodicity from the AMF network element, or receives the processing time of the second data and the processing periodicity from the AMF network element. With reference to FIG. 7, the following describes a specific implementation procedure in which the RAN receives the reference time from the AMF network element. It should be understood that for a specific implementation procedure in which the RAN receives the processing time of the second data and/or the processing periodicity from the AMF network element, refer to content shown in FIG. 7.

FIG. 7 is a schematic flowchart in which a RAN receives reference time from an AMF network element. As shown in FIG. 7, the procedure may include the following content.

S701: A terminal device sends a first message to an AMF network element. Correspondingly, the AMF network element receives the first message.

The first message is used to request to modify a PDU session. The first message includes reference time. The first message is a NAS message, for example, a PDU session modification request (PDU session modification request) message. For example, the first message is a PDU session modification request message. The terminal device may transparently transmit the PDU session modification request message including the reference time to the AMF network element through the RAN. For example, the terminal device has a service requirement, and may initiate a PDU session procedure related to a service. Specifically, the terminal device may obtain the reference time, and send the PDU session modification request message including the reference time to the AMF network element, to request to modify a PDU session. Optionally, the PDU session modification request message further includes a PDU session identifier, a packet filter (packet filter), and the like. In FIG. 7, an example in which the first message is a PDU session modification request message is used, and the message may be another NAS message.

After receiving the first message, the AMF network element obtains the reference time. Then, the AMF may send the reference time to the RAN in a manner A or a manner B. If the AMF network element sends the reference time to the RAN in the manner A, content shown in step S702 is performed. If the AMF network element sends the reference time to the RAN in the manner B, content shown in step S703 to step S707 is performed.

S702: The AMF network element sends a second message to the RAN. Correspondingly, the RAN receives the second message.

The second message may be an uplink NAS transport message, or may be another N2 message. This is not limited in this embodiment of this application. The second message includes the reference time. For example, after obtaining the reference time, the AMF network element may send the second message including the reference time to the RAN, for example, send an N2 message including the reference time to the RAN, so that the RAN obtains the reference time. In FIG. 7, an example in which the second message is the N2 message is used.

S703: The AMF network element sends a third message to an SMF network element. Correspondingly, the SMF network element receives the third message.

The third message is used to request to modify a PDU session. The third message includes the reference time. The third message may be an Nsmf service message, for example, a session management context update request. The session management context update request may be implemented by invoking an Nsmf session update session management context request service (Nsmf_PDUSession_UpdateSMContext request), or by sending a session management context update request message. This is not limited in this embodiment of this application. For example, after receiving the PDU session modification request message, the AMF network element obtains the reference time, and may send the session management context update request including the reference time to the SMF network element, to request to modify a PDU session. In FIG. 7, an example in which the third message is the session management context update request is used.

S704: The SMF network element sends a fourth message to a UPF network element. Correspondingly, the UPF network element receives the fourth message.

The fourth message is used to request to modify a PDU session. The fourth message includes the reference time. The fourth message may be an N4 message, for example, an N4 session modification request (N4 session modification request) message. For example, after receiving the session management context update request, the SMF network element obtains the reference time, and may send an N4 session modification request message including the reference time to the UPF network element, to request to modify a PDU session. In FIG. 7, an example in which the fourth message is the N4 session modification request message is used.

Optionally, after receiving the N4 session modification request message, the UPF network element parses the N4 session modification request message to obtain the reference time, and stores the reference time, so that the UPF can subsequently send first data to the RAN based on the reference time.

S705: The UPF network element sends a fifth message to the SMF network element, and correspondingly, the SMF network element receives the fifth message.

The fifth message may be used to reply to the N4 session modification request. In this embodiment of this application, an example in which the fifth message indicates that N4 session modification succeeds is used for description. The fifth message may be an N4 message, for example, an N4 session modification response (N4_PDU session modification response) message. In FIG. 7, an example in which the fifth message is the N4 session modification response message is used.

S706: The SMF network element sends a sixth message to the AMF network element. Correspondingly, the AMF network element receives the sixth message.

The sixth message indicates that PDU session modification succeeds. The sixth message may be an Nsmf service message, for example, a session management context update response. The session management context update response may be implemented by invoking an Nsmf_PDU session update session management context response service (Nsmf_PDUSession_UpdateSMContext response), or by sending a session management context update response message. This is not limited in this embodiment of this application. Optionally, the sixth message may include the reference time. For example, after receiving the N4 session modification response message, the SMF network element may send the session management context update response including the reference time to the AMF network element. In FIG. 7, an example in which the sixth message is the session management context update response is used.

S707: The AMF network element sends a seventh message to the RAN. Correspondingly, the RAN receives the seventh message.

The seventh message includes the reference time, namely, the reference time from the SMF network element in S706. The seventh message may be a downlink NAS transport message, namely, an N2 message carrying a PDU session modification success message, or may be another N2 message. This is not limited in this embodiment of this application. In FIG. 7, an example in which the seventh message is the N2 message is used.

S708: The terminal device and the UPF network element complete a subsequent PDU session modification procedure.

After receiving the N2 message of the PDU session modification success message from the AMF network element, the RAN may send a NAS message (not shown in FIG. 7) indicating that PDU session modification succeeds to the terminal device. Then, the terminal device and the UPF network element may complete the subsequent PDU session modification procedure.

It should be noted that the terminal device may send the reference time to the RAN in a PDU session modification procedure initiated by the terminal device. To be specific, in a process of transmitting an uplink NAS message, UE sends the reference time to a RAN side at an RRC layer, or may send the reference time to the RAN in another communication procedure. This is not limited in this embodiment of this application.

Service data of an application server arrives at a terminal device side through the UPF network element, and then through the RAN. The foregoing embodiment describes processing of the service data by the RAN in a service data transmission process, so that the service data can arrive at the terminal device side in time, and an out-of-order degree of arrival of the service data at the terminal device is reduced. In another possible implementation, the UPF network element may process the service data in a service data transmission process, so that the service data can arrive at a RAN side in time. This reduces an out-of-order degree of arrival of the service data at the RAN. In this case, the following uses the first data as an example to describe a procedure of processing the first data by the UPF network element.

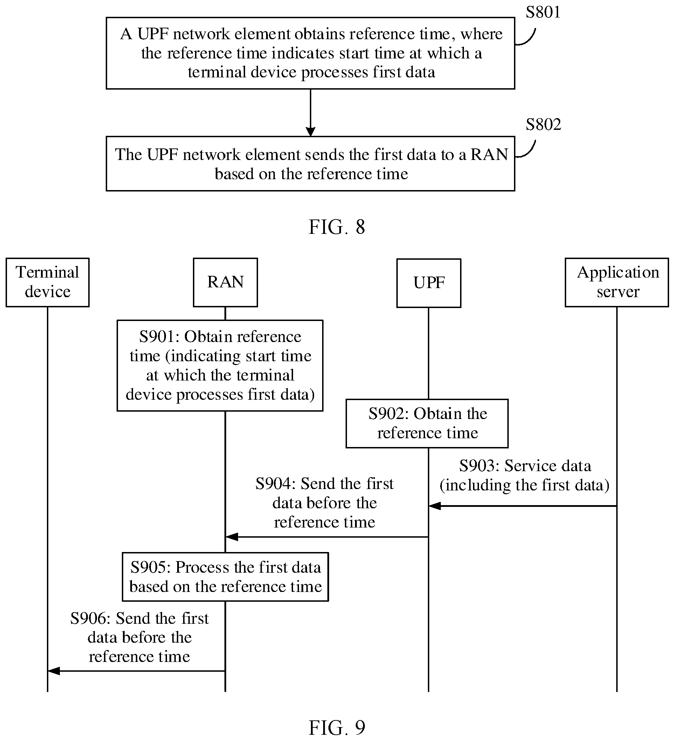

FIG. 8 is another schematic flowchart of a communication method according to an embodiment of this application. As shown in FIG. 8, the method may include the following content.

S801: A UPF network element obtains reference time.

The reference time indicates start time at which a terminal device processes first data. The reference time may be absolute time, or may be relative time on a terminal device side. This is not limited in this embodiment of this application. The first data may be a media frame, a video fragment, voice data, or the like. A specific form of the first data is not limited in this embodiment of this application. In addition, the first data includes one or more data packets. In this embodiment of this application, an example in which the first data includes a plurality of data packets is used for description. The start time at which the terminal device processes the first data may be understood as a moment at which the terminal device starts to receive the first data, may be understood as a moment at which the terminal device completes receiving of the first data, may be understood as a moment at which the terminal device starts to decode the first data, may be understood as a moment at which the terminal device starts to display or play the first data, or the like. This is not limited in this embodiment of this application.

In an example, the UPF network element may obtain the reference time through a receiving operation. For example, the UPF network element may receive the reference time from an SMF network element. For example, the terminal device sends the reference time to an AMF network element in a PDU session modification procedure. After receiving the reference time, the AMF network element sends the reference time to a RAN. For a specific implementation process, refer to content shown in FIG. 7. Details are not described herein again.

In another example, the UPF network element may determine the reference time based on processing time of second data and a processing periodicity. For example, the UPF network element may obtain the processing time of the second data and the processing periodicity, and determine the reference time based on the processing time of the second data and the processing periodicity. For a specific implementation process in which the UPF network element determines the reference time based on the processing time of the second data and the processing periodicity, refer to related description in step S401 in which the RAN determines the reference time based on the processing time of the second data and the processing periodicity. Details are not described herein again. The first data and the second data are data of a same service, and the second data may be any piece of data in the service. For example, the second data may be a first piece of data in the service. The first data and the second data may be data of a periodic service, that is, a service to which the first data belongs is the periodic service. For example, the first data and the second data are media frames. The processing time of the second data indicates start time at which the terminal device processes the second data. The processing periodicity indicates a periodicity for processing the periodic service, that is, indicates a periodicity for processing the service to which the first data belongs.

The UPF network element may obtain the processing time of the second data and the processing periodicity through a receiving operation. For example, the UPF network element may receive the processing time of the second data and the processing periodicity from the SMF network element based on content shown in FIG. 7. Alternatively, the UPF network element may obtain the processing time of the second data and determine the processing periodicity through a receiving operation. For example, the UPF network element may receive the processing time of the second data from the SMF network element based on the procedure shown in FIG. 7, and determine a processing periodicity of the service based on a historical transmission status of the service to which the first data belongs. For example, the UPF network element may collect statistics on transmission duration of each piece of data in a historical transmission process of the service based on the historical transmission status of the service, and determine the processing periodicity of the service based on the transmission duration of each piece of data. For example, the UPF network element performs a statistical average operation. Alternatively, the UPF network element may obtain a processing periodicity of the second data and determine the processing time through a receiving operation. For example, the UPF may receive the processing periodicity of the second data from the SMF network element, and determine the processing time of the second data based on the historical transmission status of the service to which the first data belongs. Alternatively, the UPF network element may determine the processing time of the second data and the processing periodicity. For example, the UPF may determine the processing time of the second data and the processing periodicity of the service based on the historical transmission status of the service to which the first data belongs.

After obtaining the reference time, the UPF network element may store the reference time, so that the UPF network element subsequently sends the first data to the RAN based on the reference time after receiving the first data, that is, performs content of step S802. Alternatively, after receiving the first data, the UPF network element obtains the reference time, and then sends the first data to the RAN based on the reference time, that is, performs content of step S802. An execution sequence of obtaining the reference time is not limited in this embodiment of this application.

S802: The UPF network element sends the first data to the RAN based on the reference time.

The first data may include one or more data packets. In this embodiment of this application, an example in which the first data includes a plurality of data packets is used for description. A header of each data packet of the first data includes characteristic information, and the characteristic information is used to identify data to which the data packet belongs. The characteristic information may include a data identifier, like a number, a sequence number, or a frame number of data. Further, the characteristic information may further include a quantity of data packets, namely, a quantity of data packets included in the data to which the data packet belongs. The characteristic information is encapsulated in the header of the data packet, for example, encapsulated at an IP layer, or encapsulated at an application layer, or encapsulated at a transport layer, or may be encapsulated at another layer. This is not limited in this embodiment of this application.

For example, before step S802, the UPF network element may receive the first data from an application server. Specifically, the application server sends service data to the UPF network element, where the service data includes a plurality of data packets, and the plurality of data packets include a data packet of the first data. Correspondingly, the UPF network element receives the service data. Further, the UPF network element may determine the first data from the plurality of data packets based on the characteristic information in the header of each data packet of the plurality of data packets.

The application server may actively push the service data to the terminal device. In other words, the application server actively sends the service data to the UPF network element, so that the service data is sent to the terminal device through the UPF network element and the RAN. Alternatively, the application server may send the service data to the terminal device in response to a service request of the terminal device. To be specific, if the terminal device has a service requirement, the terminal device may send a service request message to the UPF network element through the RAN. After receiving the service request message, the UPF network element forwards the service request message to an application server corresponding to a service. After receiving the service request message, the application server sends service data to the UPF network element, so that the service data is sent to the terminal device through the UPF network element and the RAN.

Optionally, if the service data is data of a periodic service, the application server may generate or obtain a plurality of pieces of data of the service data based on a processing periodicity, for example, obtain one piece of data in one processing periodicity; and the application server may send the plurality of pieces of data of the service data to the UPF network element one by one based on the processing periodicity, for example, send one piece of data in one processing periodicity.

It should be noted that the application server sends the plurality of pieces of data in sequence, but a sequence in which the UPF network element receives the plurality of pieces of data is also uncertain due to uncertainty of network transmission. For example, the service data is video data. The service data includes a media frame 0, a media frame 1, a media frame 2, a media frame 3, and a media frame 4. The application server sends the service data in a sequence of the media frame 0, the media frame 1, the media frame 2, the media frame 3, and the media frame 4. Data transmission is performed at a granularity of a data packet. Due to uncertainty of a network environment between the application server and the UPF network element, for example, burst traffic or network congestion, the plurality of media frames cannot arrive at the UPF network element in sequence. For example, a data packet in the media frame 1 arrives at the UPF network element before a data packet in the media frame 0. For another example, the media frame 3 arrives at the UPF network element later than the media frame 4.

After receiving the first data, the UPF network element may perform priority scheduling on a sending sequence of the first data based on the reference time. For example, the UPF network element sends the first data to the RAN before the reference time. For example, the UPF network element may determine that data that needs to be currently transmitted is the first data, determine the first data from a plurality of data packets based on characteristic information in a header of each data packet of the plurality of received data packets, and send the first data to the RAN in time before the reference time. For a specific implementation in which the UPF network element determines that the data that needs to be currently transmitted is the first data, refer to the related description in step S402 in which the RAN determines that the data that needs to be currently transmitted is the first data. Data transmission is performed at a granularity of a data packet. Due to uncertainty of a network environment between the UPF network element and the application server, a plurality of data packets sequentially sent by the application server arrive at the UPF network element out of order, as shown in FIG. 5a. In this embodiment of this application, the UPF network element performs, based on the reference time, priority scheduling on a sending sequence of the plurality of data packets that arrive out of order, so that the plurality of data packets that arrive at the UPF network element out of order can be sent to the RAN in sequence. This reduces an out-of-order degree of arrival of the data packets at the RAN.

If the first data is data of a periodic service, the UPF network element may send the first data to the RAN in a current processing periodicity and before the reference time. For example, the UPF network element may determine that data that needs to be transmitted in the current processing periodicity is the first data, and determine the first data from a plurality of data packets based on characteristic information in a header of each data packet of the plurality of received data packets. Further, the UPF network element sends the first data to the RAN in the current periodicity and before the reference time, so that the RAN can receive the first data in one processing periodicity and before the reference time.

For example, the first data includes a first data packet, and the UPF network element may determine, based on characteristic information in a header of the first data packet, whether the first data packet belongs to the first data. If the first data packet belongs to the first data, the UPF network element sends the first data packet to the RAN in a current processing periodicity and before the reference time. If the first data packet does not belong to the first data, after sending the first data, the UPF network element may perform priority scheduling again on a sending sequence of the first data packet based on the characteristic information in the header of the first data packet.

Optionally, if the first data packet does not belong to the first data, the UPF network element may determine not to send the first data packet to the terminal device in the current processing periodicity. In other words, the UPF network element sends only a plurality of data packets of one piece of data in one processing periodicity. This can avoid sending a plurality of pieces of data in one processing periodicity, to reduce problems such as packet loss and skipping caused when the terminal device processes only one piece of data in a plurality of pieces of data received in one processing periodicity, and improve user service experience. Further, if the first data packet belongs to next piece of data of the first data, the UPF may determine to start to send the first data packet after sending the first data in a current processing periodicity, to improve data transmission efficiency.

In this case, the UPF network element processes the first data based on start time at which the terminal device completes processing of the first data.

In the foregoing embodiment, the UPF network element performs priority scheduling on a sending sequence of the first data based on the start time at which the terminal device processes the first data, so that a plurality of data packets that arrive at the UPF network element out of order are sent to the RAN in sequence before the reference time. This reduces an out-of-order degree of arrival of the plurality of data packets at the RAN, and enables the first data to arrive at the RAN before the reference time.

FIG. 4 and FIG. 8 respectively describe processing of the first data from the RAN side and the UPF side. The following describes a communication method provided in embodiments of this application from a perspective of interaction between the RAN and the UPF network element.

FIG. 9 is another schematic flowchart of a communication method according to an embodiment of this application. As shown in FIG. 9, the method may include the following content.

S901: ARAN obtains reference time.

The reference time indicates start time at which a terminal device processes first data. For a specific implementation process in which the RAN obtains the reference time, refer to related content of step S401. Details are not described herein again.

S902: A UPF network element obtains the reference time.

For a specific implementation process in which the UPF network element obtains the reference time, refer to related content in step S801. Details are not described herein again.

It should be noted that an execution sequence of step S901 and step 902 is merely an example, and this embodiment of this application is not limited thereto. For example, if the RAN and the UPF network element obtain the reference time in the manner B in FIG. 7, the UPF network element may obtain the reference time before the RAN.

S903: An application server sends service data to the UPF network element. Correspondingly, the UPF network element receives the service data.

The application server actively sends the service data to the UPF network element, or the application server may send the service data to the UPF network element in response to a service request message of the terminal device. The service data includes a plurality of data packets, and the plurality of data packets include a data packet of the first data. In addition, for a specific implementation process in which the application server sends the service data to the UPF network element, refer to related content of step S802. Details are not described herein again.

S904: The UPF network element sends the first data to the RAN based on the reference time. Correspondingly, the RAN receives the first data.

After receiving the service data, the UPF network element may perform priority scheduling on a sending sequence of the plurality of data packets of the service data based on the reference time. For example, the UPF network element may send the first data to the RAN based on the reference time, for example, send the first data to the RAN before the reference time. For a specific implementation process of step S904, refer to related content of step S802. Details are not described herein again.

S905: The RAN processes the first data based on the reference time.

In step S904, the UPF network element may send a plurality of data packets to the RAN in sequence. However, due to uncertainty of a network environment between the UPF network element and the RAN, the plurality of data packets may arrive at the RAN out of order. In step S905, the RAN may perform priority scheduling on a sending sequence of the plurality of data packets based on the reference time. For example, the RAN processes the first data based on the reference time, for example, sends the first data to the terminal device before the reference time, or deletes the first data based on the reference time. For a specific implementation process of step S905, refer to the related content of step S402. Details are not described herein again.

S906: The RAN sends the first data to the terminal device before the reference time. Correspondingly, the terminal device receives the first data.

The RAN sends the first data to the terminal device before the reference time, so that the terminal device receives the first data before the reference time. Further, after receiving the first data, the terminal device starts to process the first data at the reference time, for example, render, display, or play the first data.

In the foregoing embodiment, both the UPF network element and the RAN process the first data based on the reference time. The UPF network element performs priority scheduling on a plurality of data packets of the first data based on the reference time, so that an out-of-order degree of data packets caused by uncertainty of a network environment between the UPF network element and the application server can be reduced. The RAN network element performs priority scheduling on the plurality of data packets of the first data based on the reference time, so that an out-of-order degree of data packets caused by uncertainty of a network environment between the UPF network element and the RAN can be reduced. In this way, an out-of-order degree of arrival of the plurality of data packets at the terminal device can be reduced, stability and reliability of data transmission can be improved, and the first data can arrive at the terminal device before the start time at which the terminal device processes the first data, so that the terminal device processes the first data.

The foregoing mainly describes the solution provided in this embodiment of this application from a perspective of a device and a perspective of device interaction. It may be understood that, to implement the foregoing functions, each device may include a corresponding hardware structure and/or software module for performing each function. A person skilled in the art should be easily aware that, in combination with units and algorithm steps of the examples described in embodiments disclosed in this specification, embodiments of this application may be implemented by hardware or a combination of hardware and computer software. Whether a function is performed in a manner of hardware or computer software driving hardware depends on a specific application and an implementation constraint condition of the technical solution. A person skilled in the art may use different methods to implement the described functions for each particular application, but it should not be considered that the implementation goes beyond the scope of this application.

In this embodiment of this application, the device may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

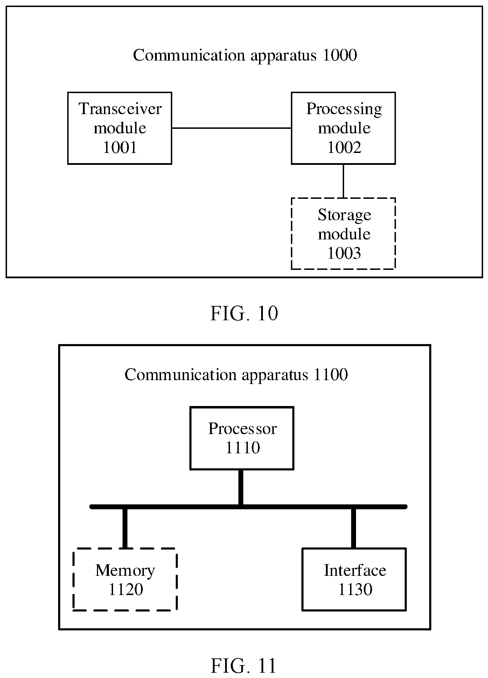

When the integrated unit is used, FIG. 10 is a possible example block diagram of a communication apparatus according to an embodiment of this application. As shown in FIG. 10, a communication apparatus 1000 may include a transceiver module 1001 and a processing module 1002. The processing module 1002 is configured to control and manage an action of the communication apparatus 1000. The transceiver module 1001 is configured to support communication between the communication apparatus 1000 and another device, for example, perform sending and receiving operations under control of the processing module 1002. Optionally, the transceiver module 1001 may be one module, or may be two modules, such as a receiving module and a sending module. Optionally, the communication apparatus 1000 may further include a storage module 1003, configured to store program code and/or data of the communication apparatus 1000.

The processing module 1002 may support the communication apparatus 1000 in performing the actions of the access network element, the user plane function network element, or the terminal device in the foregoing method examples. Alternatively, the processing module 1002 mainly performs internal actions of the access network element, the user plane function network element, or the terminal device in the method examples.

For example, the communication apparatus 1000 may be the access network element in the foregoing embodiments, or may be a component (for example, a chip) of the access network element in the foregoing embodiments. The processing module 1002 is configured to: obtain reference time, where the reference time indicates start time at which a terminal device processes first data; and process the first data based on the reference time.

In a possible implementation, when the reference time is obtained,

the transceiver module 1001 is configured to receive the reference time from the terminal device or an access and mobility management function network element; or
the processing module 1002 is specifically configured to: obtain processing time of second data and a processing periodicity, and determine the reference time based on the processing time of the second data and the processing periodicity, where the first data and the second data are data of a periodic service, the processing periodicity indicates a periodicity for processing the periodic service, and the processing time of the second data indicates start time at which the terminal device processes the second data.

In a possible implementation, when the processing time of the second data and the processing periodicity are obtained,

the transceiver module 1001 is configured to receive the processing time of the second data and the processing periodicity from the terminal device;
the processing module 1002 is configured to determine the processing time of the second data and the processing periodicity; or
the transceiver module 1001 is configured to receive the processing time of the second data from the terminal device, and the processing module 1002 is configured to determine the processing periodicity.

In a possible implementation, when the first data is processed based on the reference time,

the transceiver module 1001 is configured to send the first data before the reference time; or
the processing module 1002 is configured to delete the first data based on the reference time.

In a possible implementation, when deleting the first data based on the reference time, the processing module 1002 is configured to: when sending of the first data is not completed before the reference time, delete the first data based on the reference time.

In a possible implementation, the first data is a media frame.

In a possible implementation, before the reference time, the transceiver module 1001 is further configured to receive third data and fourth data, where sending time of the fourth data is later than sending time of the third data; and the processing module 1002 is further configured to delete the third data based on the reference time.

In a possible implementation, that sending time of the fourth data is later than sending time of the third data may be that: a frame number of the fourth data is greater than a frame number of the third data.

In a possible implementation, the transceiver module 1001 is further configured to receive a plurality of data packets from a user plane function network element, where the plurality of data packets include a data packet of first data, a header of each data packet of the plurality of data packets includes characteristic information, and the characteristic information includes at least one of a data identifier or a quantity of data packets; and the processing module 1002 is further configured to determine the first data from the plurality of data packets based on the characteristic information in the header of each data packet.

For another example, the communication apparatus 1000 may be the terminal device in the foregoing embodiments, or may be a component (for example, a chip) of the terminal device in the foregoing embodiments. The transceiver module 1001 is configured to: send processing time of second data to an access network element, where the processing time of the second data indicates start time at which a terminal device processes the second data; and receive first data before reference time, where the reference time indicates start time at which the terminal device processes the first data.

In a possible implementation, the first data is the second data.

In a possible implementation, the transceiver module 1001 is further configured to send a processing periodicity to the access network element, where the first data and the second data are data of a periodic service, and the processing periodicity indicates a periodicity for processing the periodic service.

In a possible implementation, the first data is a media frame.

For another example, the communication apparatus 1000 may be the user plane function network element in the foregoing embodiments, or may be a component (for example, a chip) of the user plane function network element in the foregoing embodiments. The processing module 1002 is configured to obtain reference time, where the reference time indicates start time at which a terminal device processes first data. The transceiver module 1001 is configured to send the first data to an access network element based on the reference time.

In a possible implementation, when the reference time is obtained,

the transceiver module 1001 is configured to receive the reference time from a session management function network element; or
the processing module 1002 is configured to: obtain processing time of second data and a processing periodicity, and determine the reference time based on the processing time of the second data and the processing periodicity, where the first data and the second data are data of a periodic service, the processing periodicity indicates a periodicity for processing the periodic service, and the processing time of the second data indicates start time at which the terminal device processes the second data.

In a possible implementation, when the processing time of the second data and the processing periodicity are obtained,

the transceiver module 1001 is configured to receive the processing time of the second data and the processing periodicity from the session management function network element;
the transceiver module 1001 is configured to receive the processing time of the second data from the session management function network element, and the processing module 1002 is configured to determine the processing periodicity;
the processing module 1002 is configured to determine the processing time of the second data, and the transceiver module 1001 is configured to receive the processing periodicity from the session management function network element; or
the processing module 1002 is configured to determine the processing time of the second data, and determine the processing periodicity.

In a possible implementation, the first data is a media frame.

It should be understood that division of the units in the foregoing apparatus is merely logical function division. During actual implementation, all or some of the units may be integrated into one physical entity, or may be physically separated. In addition, all units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of these units may be integrated together, or may be implemented independently. The processing element herein may also be a processor, or may be an integrated circuit having a signal processing capability. In an implementation process, the operations of the foregoing methods or the foregoing units may be implemented by using a hardware integrated logic circuit in the processor element, or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these integrated circuit forms. For another example, when the unit in the apparatus may be implemented in a form in which a processing element schedules a program, the processing element may be a processor, for example, a general-purpose central processing unit (central processing unit, CPU) or another processor that can invoke the program. For another example, these units may be integrated together and implemented in a form of a system-on-chip (system-on-a-chip, SOC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

FIG. 11 is a schematic diagram of a communication apparatus according to an embodiment of this application. The communication apparatus is configured to implement operations of the access network element, the user plane function network element, or the terminal device in the foregoing embodiments. A communication apparatus 1100 includes a processor 1110 and an interface 1130. Optionally, the communication apparatus 1100 further includes a memory 1120. The interface 1130 is configured to communicate with another device.

In the foregoing embodiments, the method performed by the access network element, the user plane function network element, or the terminal device may be implemented by the processor 1110 by invoking a program stored in a memory (which may be the access network element, the user plane function network element, or the memory 1120 in the terminal device, or may be an external memory). In other words, the communication apparatus 1100 configured to implement a function of the access network element, the user plane function network element, or the terminal device may include the processor 1110. The processor 1110 invokes a program in the memory, to perform the method performed by the access network element, the user plane function network element, or the terminal device in the foregoing method embodiments. The processor herein may be an integrated circuit having a signal processing capability, for example, a CPU. An apparatus used for an access network device or a policy control function network element may be implemented by one or more integrated circuits configured to implement the foregoing method, for example, may be implemented by one or more ASICs, one or more microprocessors DSPs, one or more FPGAs, or a combination of at least two of these integrated circuit forms. Alternatively, the foregoing implementations may be combined.

When the communication apparatus 1100 is used in the foregoing method, the processor 1110 is configured to implement a function of the processing module 1002, and the interface 1130 is configured to implement a function of the transceiver module 1001.

All or some of the foregoing embodiments may be implemented by using software, hardware, firmware, or any combination thereof. When software is used for implementation, the implementation may be totally or partially implemented in a form of a computer program product. The computer program product includes one or more computer instructions. When computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device like a server or a data center integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Various illustrative logic units and circuits described in embodiments of this application may implement or operate the described functions by using a general-purpose processor, a digital signal processor, an application-specific integrated circuit (ASIC), a field programmable gate array (FPGA) or another programmable logic apparatus, a discrete gate or transistor logic, a discrete hardware component, or any implementation of the foregoing combinations. The general-purpose processor may be a microprocessor. Optionally, the general-purpose processor may also be any conventional processor, controller, microcontroller, or state machine. The processor may also be implemented by a combination of computing devices, such as a digital signal processor and a microprocessor, a plurality of microprocessors, one or more microprocessors combined with a digital signal processor core, or any other similar configuration.

Steps of the methods or algorithms described in embodiments of this application may be directly embedded into hardware, a software unit executed by a processor, or a combination thereof. The software unit may be stored in a random access memory (random access memory, RAM), a flash memory, a read-only memory (read-only memory, ROM), an EPROM memory, an EEPROM memory, a register, a hard disk, a removable magnetic disk, a CD-ROM, or a storage medium of any other form in the art. For example, the storage medium may be connected to the processor, so that the processor may read information from the storage medium and write information into the storage medium. Optionally, the storage medium may be further integrated into the processor. The processor and the storage medium may be disposed in an ASIC.

The computer program instructions may alternatively be loaded onto a computer or another programmable data processing device, so that a series of operations and steps are performed on the computer or the another programmable device, and computer-implemented processing is generated. Therefore, the instructions executed on the computer or the another programmable device provide steps for implementing a specific function in one or more procedures in the flowcharts and/or in one or more blocks in the block diagrams.

In one or more example implementations, the foregoing functions described in embodiments of this application may be implemented by using hardware, software, firmware, or any combination the three. If the functions are implemented by using software, the functions may be stored in a computer-readable medium, or may be transmitted to a computer-readable medium in a form of one or more instructions or code. The computer-readable medium is either a computer storage medium or a communication medium that enables a computer program to move from one place to another. The storage medium may be an available medium that can be accessed by any general-purpose or special computer. For example, such a computer-readable medium may include but is not limited to a RAM, a ROM, an EEPROM, a CD-ROM, or another optical disc storage, a magnetic disk storage, or another magnetic storage apparatus, or any other medium that may be used to bear or store program code, where the program code is in a form of an instruction or a data structure or in a form that can be read by a general or special computer or a general or special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL), or in a wireless manner like infrared, radio, or microwave, the software is included in a defined computer-readable medium. The disc (disk) and disk (disc) include a compressed disk, a laser disk, an optical disc, a digital versatile disc (digital versatile disc, DVD), a floppy disk, and a Blu-ray disc. The disk generally copies data by a magnetic means, and the disc generally copies data optically by a laser means. The foregoing combination may also be included in the computer-readable medium.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium that facilitates transmission of a computer program from one place to another. The storage medium may be any available medium accessible to a general-purpose or a dedicated computer.

The foregoing specific implementations further describe the objectives, technical solutions, and beneficial effects of embodiments of this application in detail. It should be understood that the foregoing descriptions are merely specific implementations of embodiments of this application, but are not intended to limit the protection scope of embodiments of this application. Any modification, equivalent replacement, or improvement made based on the technical solutions of embodiments of this application shall fall within the protection scope of embodiments of this application. The foregoing descriptions in this specification of this application may enable technologies in the art to use or implement the content of embodiments of this application. Any modification based on the disclosed content should be considered obvious in the art. The basic principles described in embodiments of this application may be applied to other variations without departing from the essence and scope of this application. Therefore, content disclosed in embodiments of this application is not limited to the described embodiments and implementations, and may be extended to a maximum scope consistent with the principles and disclosed new features of this application.

Although this application is described with reference to specific features and embodiments thereof, it is clear that various modifications and combinations may be made to this application without departing from the spirit and scope of embodiments of this application. Correspondingly, the specification and the accompanying drawings are merely examples of descriptions of this application defined by the following claims, and are deemed to have covered any and all modifications, variations, combinations, or equivalents that fall within the scope of this application. It is clear that a person skilled in the art may make various modifications and variations to this application without departing from the scope of this application. In this way, provided that these modifications and variations to embodiments of this application fall within the scope of the claims of this application and their equivalent technologies, embodiments of this application are also intended to include these modifications and variations.

**Claims**

1. A communication method, comprising:

   obtaining, by an access network element, reference time, wherein the reference time indicates start time at which a terminal device processes first data; and
   processing, by the access network element, the first data based on the reference time.

2. The method according to claim 1, wherein the obtaining, by an access network element, reference time comprises:

   receiving, by the access network element, the reference time from the terminal device or an access and mobility management function network element; or
   obtaining, by the access network element, processing time of second data and a processing periodicity, and determining the reference time based on the processing time of the second data and the processing periodicity, wherein the first data and the second data are data of a periodic service, the processing periodicity indicates a periodicity for processing the periodic service, and the processing time of the second data indicates start time at which the terminal device processes the second data.

3. The method according to claim 2, wherein the obtaining, by the access network element, processing time of second data and a processing periodicity comprises:

   receiving, by the access network element, the processing time of the second data and the processing periodicity from the terminal device;

   determining, by the access network element, the processing time of the second data and the processing periodicity; or
   receiving, by the access network element, the processing time of the second data from the terminal device, and determining the processing periodicity.

4. The method according to any one of claims 1 to 3, wherein the processing, by the access network element, the first data based on the reference time comprises:

   sending, by the access network element, the first data before the reference time; or
   deleting, by the access network element, the first data based on the reference time.

5. The method according to claim 4, wherein the deleting, by the access network element, the first data based on the reference time comprises:
   when sending of the first data is not completed before the reference time, deleting, by the access network element, the first data based on the reference time.

6. The method according to any one of claims 1 to 5, wherein the first data is a media frame.

7. The method according to any one of claims 1 to 6, wherein the method further comprises:
   receiving, by the access network element, third data and fourth data before the reference time, wherein sending time of the fourth data is later than sending time of the third data; and deleting, by the access network element, the third data based on the reference time.

8. The method according to claim 7, wherein that sending time of the fourth data is later than sending time of the third data comprises:
   a frame number of the fourth data is greater than a frame number of the third data.

9. The method according to any one of claims 1 to 8, wherein the method further comprises:

   receiving a plurality of data packets from a user plane function network element, wherein the plurality of data packets comprise a data packet of the first data, a header of each data packet of the plurality of data packets comprises characteristic information, and the characteristic information comprises at least one of a data identifier or a quantity of data packets; and
   determining the first data from the plurality of data packets based on the characteristic information in the header of each data packet.

10. A communication method, comprising:

sending, by a terminal device, processing time of second data to an access network element, wherein the processing time of the second data indicates start time at which the terminal device processes the second data; and
receiving, by the terminal device, first data before reference time, wherein the reference time indicates start time at which the terminal device processes the first data.

11. The method according to claim 10, wherein the first data is the second data.

12. The method according to claim 10, wherein the method further comprises:
sending, by the terminal device, a processing periodicity to the access network element, wherein the first data and the second data are data of a periodic service, and the processing periodicity indicates a periodicity for processing the periodic service.

13. The method according to any one of claims 10 to 12, wherein the first data is a media frame.

14. A communication method, comprising:

obtaining, by a user plane function network element, reference time, wherein the reference time indicates start time at which a terminal device processes first data; and
sending, by the user plane function network element, the first data to an access network element based on the reference time.

15. The method according to claim 14, wherein the obtaining, by a user plane function network element, reference time comprises:

receiving, by the user plane function network element, the reference time from a session management function network element; or
obtaining, by the user plane function network element, processing time of second data and a processing periodicity, and determining the reference time based on the processing time of the second data and the processing periodicity, wherein the first data and the second data are data of a periodic service, the processing periodicity indicates a periodicity for processing the periodic service, and the processing time of the second data indicates start time at which the terminal device processes the second data.

16. The method according to claim 15, wherein the obtaining, by the user plane function network element, processing time of second data and a processing periodicity comprises:

receiving, by the user plane function network element, the processing time of the second data and the processing periodicity from the session management function network element; or
receiving, by the user plane function network element, the processing time of the second data from the session management function network element, and determining the processing periodicity.

17. The method according to any one of claims 14 to 16, wherein the first data is a media frame.

18. A communication apparatus, comprising a transceiver module and a processing module, wherein

the transceiver module is configured to receive and send data under control of the processing module; and
the processing module is configured to: obtain reference time, wherein the reference time indicates start time at which a terminal device processes first data; and process the first data based on the reference time.

19. The apparatus according to claim 18, wherein when the reference time is obtained,

the transceiver module is configured to receive the reference time from the terminal device or an access and mobility management function network element; or
the processing module is configured to: obtain processing time of second data and a processing periodicity, and determine the reference time based on the processing time of the second data and the processing periodicity, wherein the first data and the second data are data of a periodic service, the processing periodicity indicates a periodicity for processing the periodic service, and the processing time of the second data indicates start time at which the terminal device processes the second data.

20. The apparatus according to claim 19, wherein when the processing time of the second data and the processing periodicity are obtained,

the transceiver module is configured to receive the processing time of the second data and the processing periodicity from the terminal device;
the processing module is configured to determine the processing time of the second data and the processing periodicity; or
the transceiver module is configured to receive the processing time of the second data from the terminal device, and the processing module is configured to determine the processing periodicity.

21. The apparatus according to any one of claims 18 to 20, wherein when the first data is processed based on the reference time,

the transceiver module is configured to send the first data before the reference time; or
the processing module is configured to delete the first data based on the reference time.

22. The apparatus according to claim 21, wherein when deleting the first data based on the reference time, the processing module is configured to: when sending of the first data is not completed before the reference time, delete the first data based on the reference time.

23. The apparatus according to any one of claims 18 to 22, wherein the first data is a media frame.

24. The apparatus according to any one of claims 18 to 23, wherein the transceiver module is further configured to:

receive third data and fourth data before the reference time, wherein sending time of the fourth data is later than sending time of the third data; and
the processing module is further configured to delete the third data based on the reference time.

25. The apparatus according to claim 24, wherein that sending time of the fourth data is later than sending time of the third data comprises:
a frame number of the fourth data is greater than a frame number of the third data.

26. The apparatus according to any one of claims 18 to 25, wherein

the transceiver module is further configured to receive a plurality of data packets from a user plane function network element, wherein the plurality of data packets comprise a data packet of the first data, a header of each data packet of the plurality of data packets comprises characteristic information, and the characteristic information comprises at least one of a data identifier or a quantity of data packets; and
the processing module is further configured to determine the first data from the plurality of data packets based on the characteristic information in the header of each data packet.

27. A communication apparatus, comprising a transceiver module and a processing module, wherein

the transceiver module is configured to receive and send data under control of the processing module; and
the transceiver module is configured to: send processing time of second data to an access network element, wherein the processing time of the second data indicates start time at which a terminal device processes the second data; and receive first data before reference time, wherein the reference time indicates start time at which the terminal device processes the first data.

28. The apparatus according to claim 27, wherein the first data is the second data.

29. The apparatus according to claim 27, wherein the transceiver module is further configured to:
send a processing periodicity to the access network element, wherein the first data and the second data are data of a periodic service, and the processing periodicity indicates a periodicity for processing the periodic service.

30. The apparatus according to any one of claims 27 to 29, wherein the first data is a media frame.

31. A communication apparatus, comprising a transceiver module and a processing module, wherein

the transceiver module is configured to receive and send data under control of the processing module;
the processing module is configured to obtain reference time, wherein the reference time indicates start time at which a terminal device processes first data; and
the transceiver module is configured to send the first data to an access network element based on the reference time.

32. The apparatus according to claim 31, wherein when the reference time is obtained,

the transceiver module is configured to receive the reference time from a session management function network element; or
the processing module is configured to: obtain processing time of second data and a processing periodicity, and determine the reference time based on the processing time of the second data and the processing periodicity, wherein the first data and the second data are data of a periodic service, the processing periodicity indicates a periodicity for processing the periodic service, and the processing time of the second data indicates start time at which the terminal device processes the second data.

33. The apparatus according to claim 32, wherein when the processing time of the second data and the processing periodicity are obtained,

> the transceiver module is configured to receive the processing time of the second data and the processing periodicity from the session management function network element; or
> the transceiver module is configured to receive the processing time of the second data from the session management function network element, and the processing module is configured to determine the processing periodicity.

34. The apparatus according to any one of claims 31 to 33, wherein the first data is a media frame.

35. A communication apparatus, comprising a memory and one or more processors, wherein the memory stores program instructions, and the one or more processors run the program instructions stored in the memory, to perform the method according to any one of claims 1 to 9, or the method according to any one of claims 10 to 13, or the method according to any one of claims 14 to 17.

36. A computer-readable storage medium, wherein the computer-readable storage medium stores a computer program, and when the computer program is executed by a computer, the computer is enabled to perform the method according to any one of claims 1 to 9, or the method according to any one of claims 10 to 13, or the method according to any one of claims 14 to 17.

37. A communication method, applied to a communication system comprising an access network element and a user plane function network element, wherein the method comprises:

> obtaining, by the access network element, reference time, wherein the reference time indicates start time at which a terminal device processes first data;
> obtaining, by the user plane function network element, the reference time, and sending the first data to the access network element based on the reference time; and
> receiving, by the access network element, the first data from the user plane function network element, and processing the first data based on the reference time.

38. The method according to claim 37, wherein the communication system further comprises the terminal device, and the method further comprises:
receiving, by the terminal device, the first data before the reference time.

39. The method according to claim 37 or 38, wherein the communication system further comprises a session management function network element, and the method further comprises:

> sending, by the session management function network element, the reference time to the user plane function network element; and
> the obtaining, by the user plane function network element, the reference time comprises:
> receiving, by the user plane function network element, the reference time from the session management function network element.

40. The method according to claim 37 or 38, wherein the obtaining, by the user plane function network element, the reference time comprises:
obtaining, by the user plane function network element, processing time of second data and a processing periodicity, and determining the reference time based on the processing time of the second data and the processing periodicity, wherein the first data and the second data are data of a periodic service, the processing periodicity indicates a periodicity for processing the periodic service, and the processing time of the second data indicates start time at which the terminal device processes the second data.

41. The method according to claim 40, wherein the communication system further comprises a session management function network element, and the method further comprises:

> sending, by the session management function network element, the processing time of the second data and the processing periodicity to the user plane function network element; and
> the obtaining, by the user plane function network element, processing time of second data and a processing periodicity comprises:
> receiving, by the user plane function network element, the processing time of the second data and the processing periodicity from the session management function network element.

42. The method according to claim 40, wherein the communication system further comprises a session management function network element, and the method further comprises:

> sending, by the session management function network element, the processing time of the second data to the user plane function network element; and

the obtaining, by the user plane function network element, processing time of second data and a processing periodicity comprises:

receiving, by the user plane function network element, the processing time of the second data from the session management function network element, and determining the processing periodicity.

43. The method according to any one of claims 37 to 42, wherein the communication system further comprises the terminal device, and the method further comprises:

sending, by the terminal device, the reference time to the access network element; and
the obtaining, by the access network element, reference time comprises:
receiving, by the access network element, the reference time from the terminal device.

44. The method according to any one of claims 37 to 42, wherein the communication system further comprises an access and mobility management function network element, and the method further comprises:

sending, by the access and mobility management function network element, the reference time to the access network element; and
the obtaining, by the access network element, reference time comprises:
receiving, by the access network element, the reference time from the access and mobility management function network element.

45. The method according to any one of claims 37 to 42, wherein the obtaining, by the access network element, reference time comprises:
obtaining, by the access network element, the processing time of the second data and the processing periodicity, and determining the reference time based on the processing time of the second data and the processing periodicity, wherein the first data and the second data are the data of the periodic service, the processing periodicity indicates the periodicity for processing the periodic service, and the processing time of the second data indicates the start time at which the terminal device processes the second data.

46. The method according to claim 45, wherein the communication system further comprises the terminal device, and the method further comprises:

sending, by the terminal device, the processing time of the second data and the processing periodicity to the access network element; and

the obtaining, by the access network element, the processing time of the second data and the processing periodicity comprises:
receiving, by the access network element, the processing time of the second data and the processing periodicity from the terminal device.

47. The method according to claim 45, wherein the communication system further comprises the terminal device, and the method further comprises:

sending, by the terminal device, the processing time of the second data to the access network element; and
the obtaining, by the access network element, the processing time of the second data and the processing periodicity comprises:
receiving, by the access network element, the processing time of the second data from the terminal device, and determining the processing periodicity.

48. The method according to any one of claims 37 to 47, wherein the processing, by the access network element, the first data based on the reference time comprises:

sending, by the access network element, the first data before the reference time; or
deleting, by the access network element, the first data based on the reference time.

49. The method according to claim 48, wherein the deleting, by the access network element, the first data based on the reference time comprises:
when sending of the first data is not completed before the reference time, deleting, by the access network element, the first data based on the reference time.

50. The method according to any one of claims 37 to 49, wherein the first data is a media frame.

51. The method according to any one of claims 37 to 50, wherein the method further comprises:
receiving, by the access network element, third data and fourth data before the reference time, wherein sending time of the fourth data is later than sending time of the third data; and deleting, by the access network element, the third data based on the reference time.

52. The method according to claim 51, wherein that sending time of the fourth data is later than sending time of the third data comprises:
a frame number of the fourth data is greater than a frame number of the third data.

| NWDAF | NEF | NRF | PCF | UDM | AF |

Nnwdaf　Nnef　Nnrf　Npcf　Nudm　Naf

Namf　Nsmf

Nausf

| AUSF | AMF | SMF | SCP |

N1　N2　N4

| UE | (R)AN | UPF | DN |

N3　N6

N9

FIG. 1

Start time at which a
terminal device
processes the frame 0

| Frame arrival | Frame 0 | | Frame 1 | Frame 2 | Frame 3 | Frame 4 | Frame 5 | Frame 6 |

| Decoding and rendering | | Frame 0 | Frame 1 | Frame 2 | Frame 3 | Frame 4 | Frame 5 |

| Displaying and refreshing | | | Frame 0 | Frame 1 | Frame 2 | Frame 3 | Frame 4 |

Processing periodicity 1 · Processing periodicity 2 · Processing periodicity 3 · Processing periodicity 4 · Processing periodicity 5 · Processing periodicity 6

FIG. 2

Start time at which a
terminal device processes
the frame 0

| Frame arrival | Frame 0 | | Frame 1 | | Frame 2 | Frame 3 | | Frame 4 | | Frame 5 |

Decoding and rendering: Frame 0 · Frame 1 · Frame 2 | Frame 3 · Frame 4

Displaying and refreshing: Frame 0 · Frame 0 · Frame 1 · Frame 3 · Frame 3

Processing periodicity 1 · Processing periodicity 2 · Processing periodicity 3 · Processing periodicity 4 · Processing periodicity 5 · Processing periodicity 6

Loss of the frame 2

FIG. 3

A RAN obtains reference time, where the reference time indicates start time at which a terminal device processes first data    S401

The RAN processes the first data based on the reference time    S402

FIG. 4

Data packet arrival

| Data packet 1_1 | Data packet 1_2 | Data packet 2_1 | Data packet 3_1 | Data packet 1_3 | Data packet 2_2 |

FIG. 5a

Start time at which a terminal device processes a media frame 1

Data packet sending

| Data packet 1_3 | Data packet 1_2 | Data packet 1_1 |

Current processing periodicity

FIG. 5b

Start time at which a terminal device processes a media frame 1

Retransmission    Sending failed

Data packet sending

| Data packet 1_3 | Data packet 1_3 | Data packet 1_2 | Data packet 1_1 |

Current processing periodicity

FIG. 5c

Data packet arrival

| Data packet 1_1 | Data packet 3_1 | Data packet 2_1 | Data packet 1_2 | Data packet 3_2 |

Processing periodicity | Processing periodicity

Data packet sending

| Data packet 3_2 | Data packet 3_1 | | Data packet 1_2 | Data packet 1_1 |

Start time at which a terminal device processes a media frame 1

FIG. 6

FIG. 7

S801

A UPF network element obtains reference time, where the reference time indicates start time at which a terminal device processes first data

S802

The UPF network element sends the first data to a RAN based on the reference time

FIG. 8

| Terminal device | RAN | UPF | Application server |

S901: Obtain reference time (indicating start time at which the terminal device processes first data)

S902: Obtain the reference time

S903: Service data (including the first data)

S904: Send the first data before the reference time

S905: Process the first data based on the reference time

S906: Send the first data before the reference time

FIG. 9

Communication apparatus 1000

| Transceiver module 1001 | Processing module 1002 |

Storage module 1003

FIG. 10

Communication apparatus 1100

Processor 1110

Memory 1120

Interface 1130

FIG. 11

## INTERNATIONAL SEARCH REPORT

| International application No. |
| --- |
| **PCT/CN2022/126769** |

| A. | CLASSIFICATION OF SUBJECT MATTER |
| --- | --- |

H04W 16/02(2009.01)i

According to International Patent Classification (IPC) or to both national classification and IPC

| B. | FIELDS SEARCHED |
| --- | --- |

Minimum documentation searched (classification system followed by classification symbols)

H04W H04Q

Documentation searched other than minimum documentation to the extent that such documents are included in the fields searched

Electronic data base consulted during the international search (name of data base and, where practicable, search terms used)

CNPAT, CNKI, WPI, EPDOC: 接入网, RAN, 终端, UE, 参考, 时间, 起始, 开始, 发送, 接收, 数据, 处理, access network, terminal, UE, reference, time, start, transmission, reception, data, processing

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111373807 A (HUAWEI TECHNOLOGIES CO., LTD.) 03 July 2020 (2020-07-03) claims 1-17 | 1-9, 18-26, 31-36 |
| Y | CN 111373807 A (HUAWEI TECHNOLOGIES CO., LTD.) 03 July 2020 (2020-07-03) claims 1-17 | 10-13, 27-30, 37-52 |
| X | WO 2020147768 A1 (HUAWEI TECHNOLOGIES CO., LTD.) 23 July 2020 (2020-07-23) claims 1-5, and description, pages 10-16 | 14-17 |
| Y | WO 2020147768 A1 (HUAWEI TECHNOLOGIES CO., LTD.) 23 July 2020 (2020-07-23) claims 1-5, and description, pages 10-16 | 10-13, 27-30, 37-52 |
| A | WO 2018202193 A1 (HUAWEI TECHNOLOGIES CO., LTD.) 08 November 2018 (2018-11-08) entire document | 1-52 |
| A | WO 2021081696 A1 (HUAWEI TECHNOLOGIES CO., LTD.) 06 May 2021 (2021-05-06) entire document | 1-52 |
| A | WO 2020220747 A1 (HUAWEI TECHNOLOGIES CO., LTD.) 05 November 2020 (2020-11-05) entire document | 1-52 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 November 2022** | **15 December 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/126769**

| Patent document cited in search report | | | Publication date (day/month/year) | Patent family member(s) | | | Publication date (day/month/year) |
|---|---|---|---|---|---|---|---|
| CN | 111373807 | A | 03 July 2020 | EP | 3706480 | A1 | 09 September 2020 |
| | | | | WO | 2019100398 | A1 | 31 May 2019 |
| | | | | US | 2020288489 | A1 | 10 September 2020 |
| WO | 2020147768 | A1 | 23 July 2020 | CN | 111447026 | A | 24 July 2020 |
| WO | 2018202193 | A1 | 08 November 2018 | CN | 108809532 | A | 13 November 2018 |
| | | | | US | 2020083933 | A1 | 12 March 2020 |
| | | | | EP | 3609107 | A1 | 12 February 2020 |
| | | | | IN | 20193704532 | A | 20 December 2019 |
| WO | 2021081696 | A1 | 06 May 2021 | CN | 114342461 | A | 12 April 2022 |
| WO | 2020220747 | A1 | 05 November 2020 | CN | 111865830 | A | 30 October 2020 |

Form PCT/ISA/210 (patent family annex) (January 2015)

**REFERENCES CITED IN THE DESCRIPTION**

**Patent documents cited in the description**

- CN 202111265533